(19) Europäisches Patentamt
European Patent Office
Office européen des brevets

(11) **EP 2 821 673 B1**

(12) **EUROPEAN PATENT SPECIFICATION**

(45) Date of publication and mention
of the grant of the patent:
**04.12.2019 Bulletin 2019/49**

(21) Application number: **12869977.4**

(22) Date of filing: **02.03.2012**

(51) Int Cl.:
*F16H 61/02* (2006.01)     *F02D 29/00* (2006.01)
*F16H 61/04* (2006.01)     *F16H 63/50* (2006.01)
*F16H 59/68* (2006.01)

(86) International application number:
**PCT/JP2012/055449**

(87) International publication number:
**WO 2013/128644 (06.09.2013 Gazette 2013/36)**

(54) **SHIFT CONTROL DEVICE**

SCHALTUNGSSTEUERUNGSVORRICHTUNG

DISPOSITIF DE COMMANDE DE CHANGEMENT DE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.01.2015 Bulletin 2015/02**

(73) Proprietor: **Toyota Jidosha Kabushiki Kaisha
Toyota-shi, Aichi 471-8571 (JP)**

(72) Inventors:
• **WATANABE Hideo
Toyota-shi,
Aichi 471-8571 (JP)**

• **OTSUBO Masaaki
Toyota-shi,
Aichi 471-8571 (JP)**

(74) Representative: **TBK
Bavariaring 4-6
80336 München (DE)**

(56) References cited:
**EP-A2- 0 635 391     EP-A2- 1 990 562
JP-A- 2006 112 248     JP-A- 2006 233 851
JP-A- 2008 121 647     JP-A- 2008 163 893
JP-A- 2008 256 190**

Printed by Jouve, 75001 PARIS (FR)

**Description**

Technical Field

The present invention relates to a shift controller for a vehicle including an internal combustion engine, a manual transmission, and a clutch that is disposed between the internal combustion engine and the manual transmission and that is capable of switching between an engaged state and a disengaged state by changing a clutch stroke.

Background Art

Conventionally, a vehicle is known, on which is mounted a clutch that is disposed between an engine (corresponding to an "internal combustion engine") and a manual transmission and that switches between an engaged state and a disengaged state by changing a clutch stroke so as to switch transmission and cutting off of a torque between the engine and the transmission. Also, in such a vehicle, various controllers, controlling method and the like are proposed for synchronizing, at the time of shifting, an engine rotational speed with an input shaft rotational speed of the manual transmission.

For example, a shift time controller for an engine is disclosed, the shift time controller includes a half-clutch switch to be turned "ON" at a half-clutch position of a clutch pedal. Control is started to synchronize the engine rotational speed with a rotational speed on an input side of a transmission after the shifting, by means of a shift operation. It is determined to be the half-clutch state to terminate the rotation synchronization control when the half-clutch is switched from "ON" to "OFF" by a return operation after stepping the clutch pedal (see Patent Document 1). Patent Document 1 recites that, in the shift time controller for an engine according to Patent Document 1, a shock when the clutch is fastened can be prevented. Patent Document 2 discloses a generic shift controller having the features of the preamble of claim 1.

Prior Art Reference

Patent Document

    [Patent Document 1] JP 2006-233851 A
    [Patent Document 2] EP 1 990 562 A2

Summary of the Invention

Problems to be Solved by the Invention

In the shift time controller for an engine recited in Patent Document 1, the control is started, at a position of the half clutch switch, to synchronize the engine rotational speed with the rotational speed on the input side of the transmission after shifting. However, for a reason described below, it is difficult to dispose the half clutch switch at an appropriate position. Thus, a shock may occur when the clutch is fastened.

For example, the higher the temperature of a clutch disc becomes, the larger an amount of thermal expansion of the clutch disc becomes, thus, it is difficult to dispose the half clutch switch at an appropriate position. Also, the larger an amount of abrasion of the clutch disc becomes, the thinner the thickness of the clutch disc becomes, thus, it is difficult to dispose the half clutch switch at an appropriate position.

The present invention was made in consideration of the above problem, and an object thereof is to certainly prevent the shock when the clutch is fastened.

Means for Solving the Problem

In order to solve the above problem, a shift controller according to the present invention is configured as described herein below.

The shift controller according to the present invention is for a vehicle including an internal combustion engine, a manual transmission and a clutch that is disposed between the internal combustion engine and the manual transmission and that is capable of switching between an engaged state and a disengaged state by changing a clutch stroke. The shift controller includes: a detection means detecting the clutch stroke; a rotation synchronization means performing rotation synchronization control to synchronize a rotational speed of the internal combustion engine with an input shaft rotational speed of the manual transmission; and a setting/learning means performing at least one of a setting and a learning of a shift operation position under a condition in which a variation amount per unit time of the clutch stroke is less than or equal to a predetermined first variation amount threshold value. In the shift controller, when the clutch is switched from the engaged state to the disengaged state, the rotation synchronization means starts the rotation synchronization control under a condition in which the detection means detects that the clutch stroke reaches a position of a first stroke that is set in advance on a side more engaged than the shift operation position where a shift operation is performed while the clutch is in the disengaged state. As performance of the learning of the shift operation position, the setting/learning means learns, as the shift operation position, the clutch stroke detected by the detection means under the condition in which the variation amount per unit time of the clutch stroke is less than or equal to the predetermined first variation amount threshold value.

In the shift controller configured as described above, when the clutch is switched from the engaged state to the disengaged state, the rotation synchronization means starts the rotation synchronization control under the condition in which the detection means detects that the clutch stroke reaches the position of the first stroke that is set in advance on the side more engaged than the shift operation position where the shift operation is performed while the clutch is in the disengaged state. Thus, by appropriately setting the shift operation position and the first stroke, a shock when the clutch is fastened can be certainly prevented. Also, at least one of the setting and the learning of the shift operation position is performed under the condition in which the variation amount per unit time of the clutch stroke is less than or equal to the predetermined first variation amount threshold value. Also, for example, when a stepping amount of a clutch pedal is not changed, the variation amount per unit time of the clutch stroke changes little. Therefore, by appropriately setting the first variation amount threshold value, the setting and the learning of the shift operation position can be performed.

In the shift controller according to the present invention, it is preferable, when the clutch is switched from the disengaged state to the engaged state, that the rotation synchronization means terminates the rotation synchronization control under a condition in which the detection means detects that the clutch stroke reaches a position of a second stroke that is set in advance on the side more engaged than the shift operation position.

In the shift controller configured as described above, when the clutch is switched from the disengaged state to the engaged state, the rotation synchronization control to synchronize the rotational speed of the internal combustion engine with the input shaft rotational speed of the manual transmission is terminated under the condition in which it is detected that the clutch stroke reaches the position of the second stroke that is set in advance on the side more engaged than the shift operation position. Thus, by appropriately setting the shift operation position and the second stroke, it is possible to terminate the rotation synchronization control at an appropriate timing.

In the shift controller according to the present invention, it is preferable that the setting/learning means performs at least one of the setting and the learning of the shift operation position under a condition in which a variation amount per unit time of a quotient obtained by dividing the input shaft rotational speed of the manual transmission by a vehicle speed is more than or equal to a predetermined second variation amount threshold value.

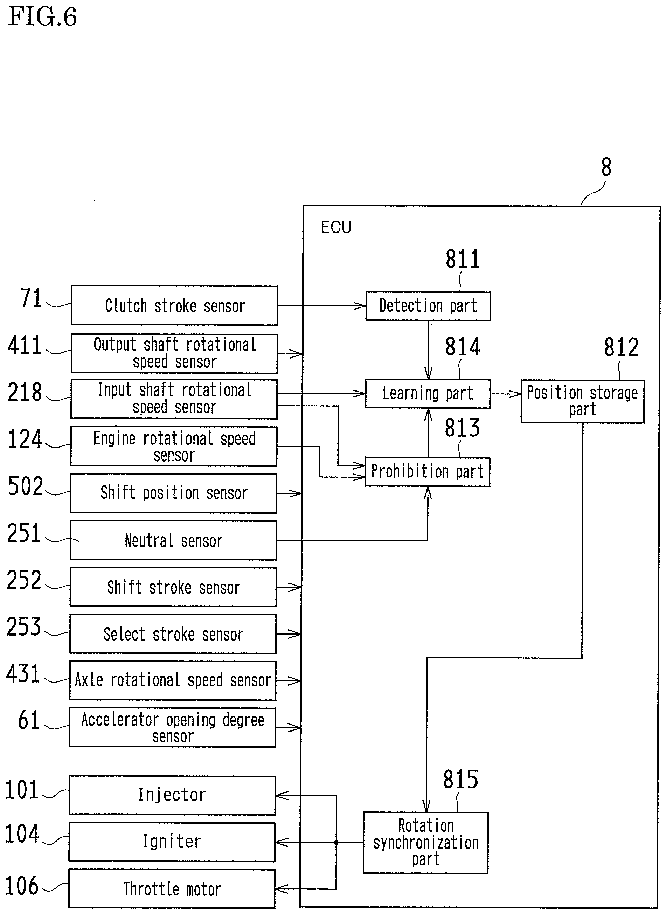

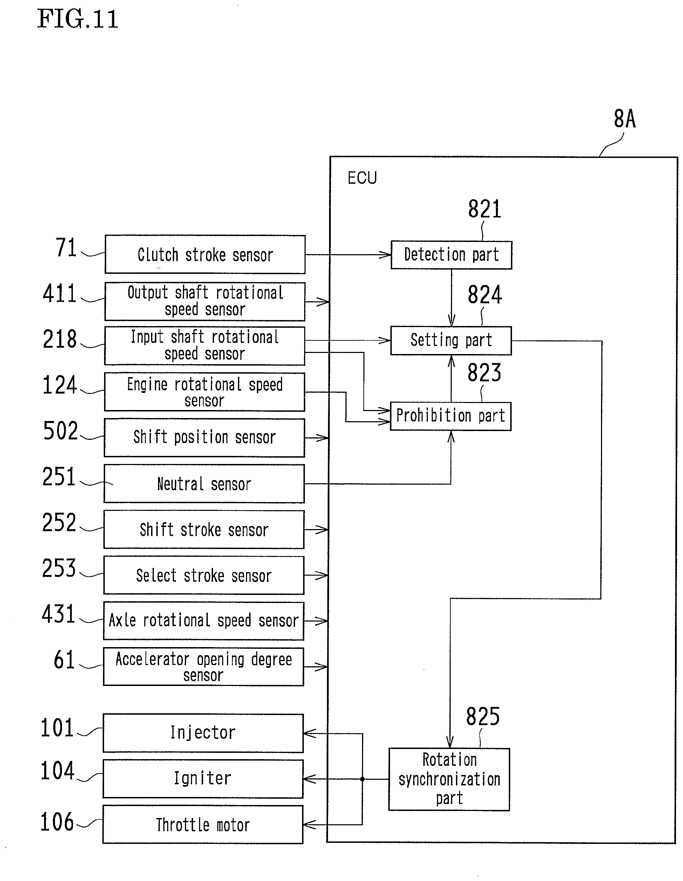

In the shift controller configured as described above, at least one of the setting and the learning of the shift operation position is performed under the condition in which the variation amount per unit time of the quotient obtained by dividing the input shaft rotational speed of the manual transmission by the vehicle speed is more than or equal to the predetermined second variation amount threshold value. Also, at the shift operation position, the variation amount per unit time of the quotient obtained by dividing the input shaft rotational speed of the manual transmission by the vehicle speed is increased (see FIGS. 6 and 11). Therefore, by appropriately setting the second variation amount threshold value, the setting and the learning of the shift operation position can be appropriately performed.

In the shift controller according to the present invention, it is preferable that the setting/learning means performs at least one of the setting and the learning of the shift operation position under a condition in which a variation amount per unit time of a quotient obtained by dividing the rotational speed of the internal combustion engine by the vehicle speed is more than or equal to a predetermined third variation amount threshold value.

In the shift controller configured as described above, at least one of the setting and the learning of the shift operation position is performed under the condition in which the variation amount per unit time of the quotient obtained by dividing the rotational speed of the internal combustion engine by the vehicle speed is more than or equal to the predetermined third variation amount threshold value. Also, at the shift operation position, the variation amount per unit time of the quotient obtained by dividing the rotational speed of the internal combustion engine by the vehicle speed is increased (see FIGS. 6 and 11). Therefore, by appropriately setting the third variation amount threshold value, the setting and the learning of the shift operation position can be appropriately performed.

In the shift controller according to the present invention, it is preferable that the setting/learning means performs at least one of the setting and the learning of the shift operation position under a condition in which an absolute value of a variation amount per unit time of the input shaft rotational speed of the manual transmission is changed from a value less than a predetermined fourth variation amount threshold value to a value more than or equal to a predetermined fifth variation amount threshold value that is more than or equal to the fourth variation amount threshold value.

In the shift controller configured as described above, at least one of the setting and the learning of the shift operation position is performed under the condition in which the absolute value of the variation amount per unit time of the input shaft rotational speed of the manual transmission is changed from the value less than the predetermined fourth variation amount threshold value to the value more than or equal to the predetermined fifth variation amount threshold value that is more than or equal to the fourth variation amount threshold value. Also, at the shift operation position, the variation amount per unit time of the input shaft rotational speed of the manual transmission is drastically changed from a small value to a large value (see FIGS. 6 and 11). Therefore, by appropriately setting the fourth variation amount threshold value and the fifth variation amount threshold value, the setting and the learning of the shift operation position can be appropriately performed.

In the shift controller according to the present invention, it is preferable that the setting/learning means performs at least one of the setting and the learning of the shift operation position under a condition in which a second-order differential value of the input shaft rotational speed of the manual transmission is more than or equal to a predetermined first positive differential threshold value and furthermore a first-order differential value of the input shaft rotational speed of the manual transmission is more than or equal to a predetermined second positive differential threshold value, and after that, the second-order differential value of the input shaft rotational speed of the manual transmission becomes less than or equal to a predetermined third negative differential threshold value.

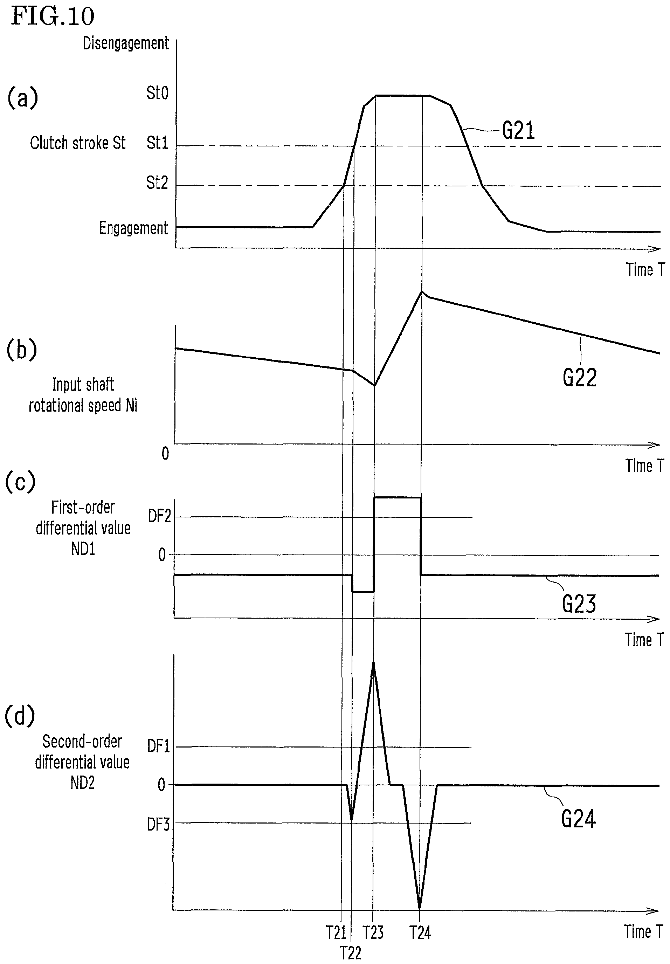

In the shift controller configured as described above, at least one of the setting and the learning of the shift operation position is performed under the condition in which the second-order differential value of the input shaft rotational speed of the manual transmission is more than or equal to the predetermined first positive differential threshold value and furthermore the first-order differential value of the input shaft rotational speed of the manual transmission is more than or equal to the predetermined second positive differential threshold value, and after that, the second-order differential value of the input shaft rotational speed of the manual transmission becomes less than or equal to the predetermined third negative differential threshold value. Therefore, by appropriately setting the first differential threshold value, the second differential threshold value and the third differential threshold value, the setting and the learning of the shift operation position can be appropriately performed (see FIG. 10).

Preferably, the shift controller according to the present invention further includes a prohibition means that prohibits the setting/learning means from performing the setting and the learning, in which the prohibition means prohibits the setting/learning means from performing the setting and the learning when the manual transmission is in a neutral position.

In the shift controller configured as described above, the setting/learning means is prohibited from performing the setting and the learning when the manual transmission is in the neutral position. Thus, when the clutch is engaged to increase the input shaft rotational speed of the manual transmission in a double-clutch operation, the setting/learning means can be appropriately prohibited from performing the setting and the learning.

Preferably, the shift controller according to the present invention further includes a prohibition means that prohibits the learning means from learning, in which the prohibition means prohibits the setting/learning means from performing the setting and the learning when the rotational speed of the internal combustion engine is substantially coincident with the input shaft rotational speed of the manual transmission.

In the shift controller configured as described above, the setting/learning means is prohibited from performing the setting and the learning when the rotational speed of the internal combustion engine is substantially coincident with the input shaft rotational speed of the manual transmission. Thus, the setting/learning means can be appropriately prohibited from performing the setting and the learning in a clutchless shifting.

Effects of the Invention

In the shift controller according to the present invention, when the clutch is switched from the engaged state to the disengaged state, the rotation synchronization means starts the rotation synchronization control under the condition in which the detection means detects that the clutch stroke reaches the position of the first stroke that is set in advance on the side more engaged than the shift operation position where the shift operation is performed while the clutch is in the disengaged state. Thus, by appropriately setting the shift operation position and the first stroke, a shock when the clutch is fastened can be certainly prevented.

Brief Description of Drawings

[FIG. 1] FIG. 1 is a configuration diagram showing an example of a power train and a control system of a vehicle on which is mounted a shift controller according to the present invention.
[FIG.2] FIG. 2 is a configuration diagram showing an example of the engine mounted on the vehicle shown in FIG. 1.
[FIG. 3] FIG. 3 is a configuration diagram showing an example of the clutch mounted on the vehicle shown in FIG. 1.

[FIG. 4] FIG. 4 is a skeleton diagram showing an example of the manual transmission mounted on the vehicle shown in FIG. 1.

[FIG. 5] FIG. 5 is a plan view showing an example of a shift pattern (a shape) of a shift gate that guides movement of the shift lever of the shift device shown in FIG. 1.

[FIG. 6] FIG. 6 is a functional configuration diagram showing an example of a functional configuration of an ECU according to a first embodiment of the present invention.

[FIG. 7] FIG. 7 is a timing chart showing an example of an operation of the ECU shown in FIG. 6.

[FIG. 8] FIG. 8 is a flowchart showing an example of a learning operation of the ECU shown in FIG. 6.

[FIG. 9] FIG. 9 is a flowchart showing an example of an operation of rotation synchronization control by the ECU shown in FIG. 6.

[FIG. 10] FIG. 10 is a timing chart showing an example of another embodiment of a learning condition in the learning part shown in FIG. 6.

[FIG. 11] FIG. 11 is a functional configuration diagram showing an example of a functional configuration of the ECU according to a second embodiment of the present invention.

[FIG. 12] FIG. 12 is a flowchart showing an example of a learning operation of the ECU shown in FIG. 11.

Modes for Carrying out the Invention

Hereinafter, description will be given on an embodiment of the present invention with reference to the drawings.

-Power Train-

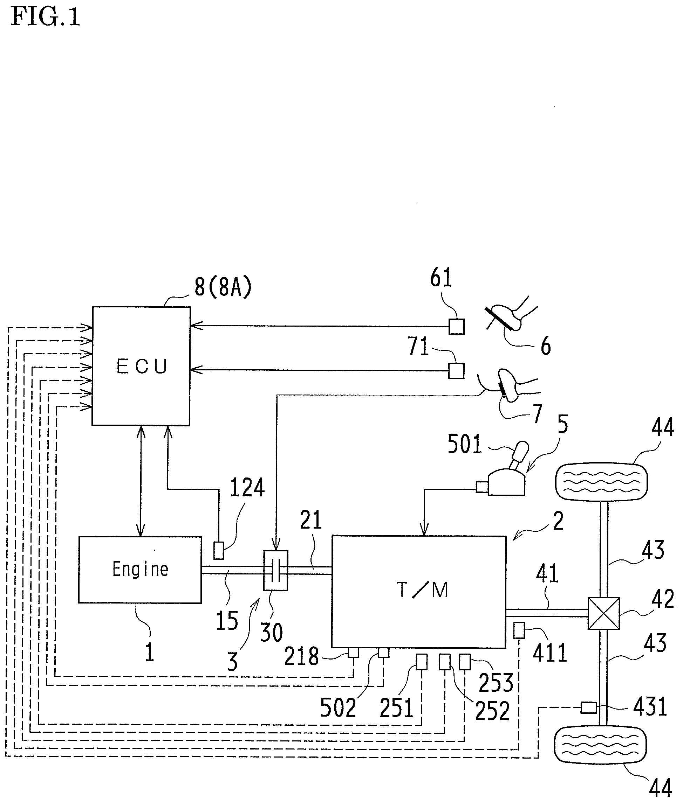

FIG. 1 is a configuration diagram showing an example of a power train and a control system of a vehicle on which a shift controller (ECU 8, 8A) of the present invention is mounted. The vehicle according to the present embodiment is a vehicle of FR (front-engine rear-drive) type, and includes an engine 1, a manual transmission (MT) 2, a clutch 3, a hydraulic circuit 4, a shift device 5, an accelerator pedal 6, a clutch pedal 7, an ECU 8 (8A), a display part 9 and the like. The shift controller of the present invention corresponds to the ECU 8 (8A), a clutch stroke sensor 71 described below and the like.

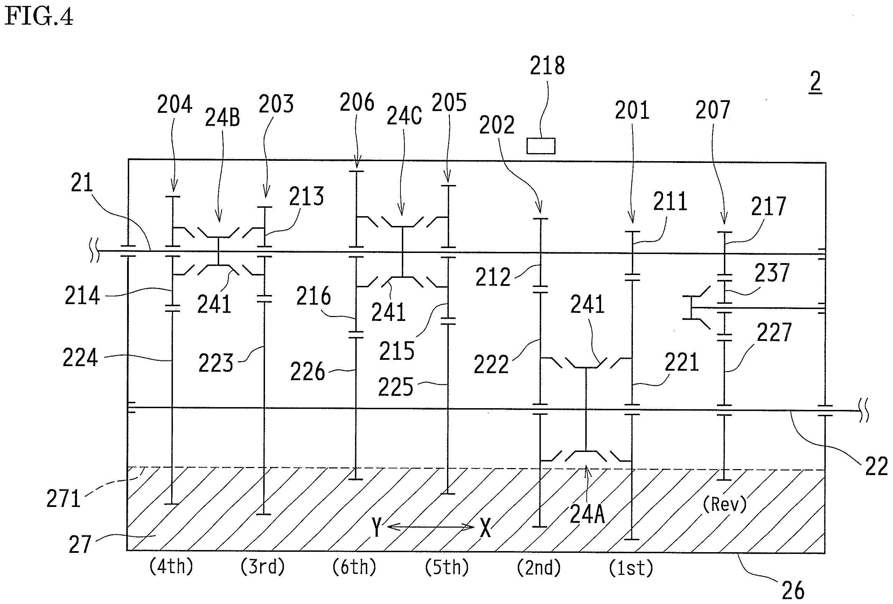

As shown in FIG. 1, a crankshaft 15 serving as an output shaft of the engine 1 is connected to the clutch 3. Also, when the clutch 3 is in an engaged state, a driving force (drive torque) of the engine 1 is transmitted to drive wheels 44 via the crankshaft 15, the clutch 3, an input shaft 21, the manual transmission 2, an output shaft 22 (see FIG. 4), a drive shaft 41, a differential gear device 42 and axles 43.

In the vicinity of the crankshaft 15, an engine rotational speed sensor 124 that detects the rotational speed of the crankshaft 15 as an engine rotational speed Ne is disposed. Also, in the vicinity of the input shaft 21 of the manual transmission 2, an input shaft rotational speed sensor 218 that detects the rotational speed of the input shaft 21 as an input shaft rotational speed Ni is disposed. In the vicinity of the output shaft 22 (or the drive shaft 41) of the manual transmission 2, an output shaft rotational speed sensor 411 that detects the rotational speed of the output shaft 22 (or the drive shaft 41) as an output shaft rotational speed No is disposed. Furthermore, in the vicinity of the axle 43, an axle rotational speed sensor 431 that detects the rotational speed of the axle 43 as an axle rotational speed Nv is disposed. The engine rotational speed Ne detected by the engine rotational speed sensor 124, the input shaft rotational speed Ni detected by the input shaft rotational speed sensor 218, the output shaft rotational speed No detected by the output shaft rotational speed sensor 411 and the axle rotational speed Nv detected by the axle rotational speed sensor 431 are output to the ECU 8 (8A).

A shift lever 501 is disposed in the shift device 5. The shift lever 501 is held by a driver, and is used for performing an operation to change a shift position. In the accelerator pedal 6, an accelerator opening degree sensor 61 that detects an accelerator opening degree is disposed. Furthermore, in the clutch pedal 7, the clutch stroke sensor 71 that detects a clutch stroke is disposed. The accelerator opening degree detected by the accelerator opening degree sensor 61 and the clutch stroke detected by the clutch stroke sensor 71 is output to the ECU 8 (8A) (see FIGS. 6 and 11). Also, the clutch stroke sensor 71 corresponds to a part of the shift controller of the present invention.

Also, in the manual transmission 2, a shift position sensor 502 that detects the shift position, a neutral sensor 251 that detects a neutral (N) position, a shift stroke sensor 252 that detects a shift stroke and a select stroke sensor 253 that detects a select stroke are disposed. Detected results of the shift position sensor 502, the neutral sensor 251, the shift stroke sensor 252 and the select stroke sensor 253 are output to the ECU 8 (8A) (see FIGS. 6 and 11).

-Engine-

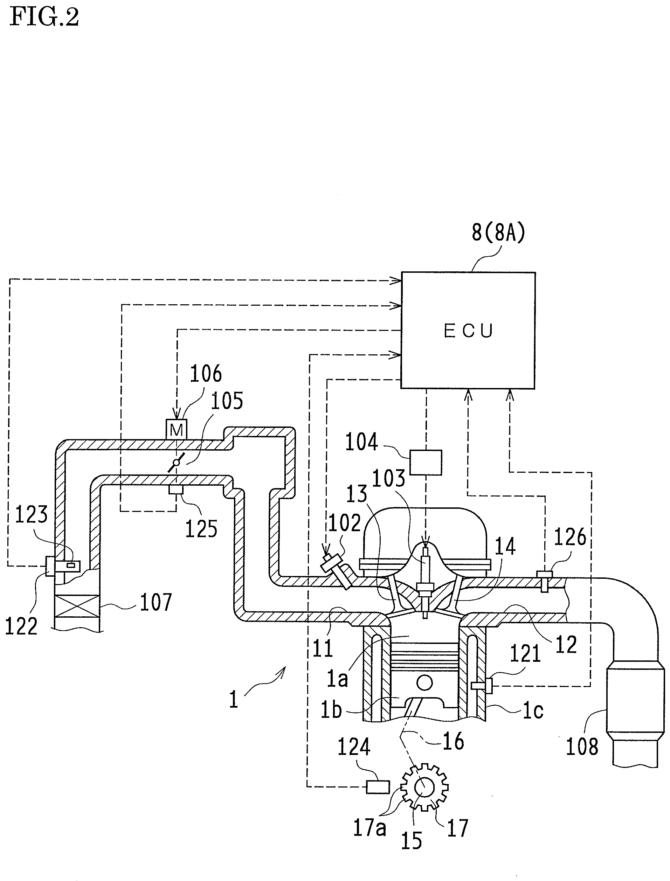

Description will be given on the engine 1 according to this embodiment with reference to FIG. 2. FIG. 2 is a configuration diagram showing an example of the engine 1 mounted on the vehicle shown in FIG. 1. The engine 1 is, for example, a multi-cylinder gasoline engine, and includes: a piston 1b that forms a combustion chamber 1a; and the crankshaft 15 serving as the output shaft (see FIG. 1). The piston 1b is coupled to the crankshaft 15 via a connecting rod 16. Reciprocating movement of the piston 1b is converted into rotational movement of the crankshaft 15 by the connecting rod 16.

The crankshaft 15 is provided with a signal rotor 17. On the outer periphery of the signal rotor 17, a plurality of projections 17a is formed at regular intervals. In the vicinity of a side of the signal rotor 17, the engine rotational speed sensor 124 is disposed. The engine rotational speed sensor 124 is, for example, an electromagnetism pickup, and generates pulse signals (output pulses) in accordance with the number of the projections 17a that pass over a position opposite to the engine rotational speed sensor 124 as the crankshaft 15 is rotated.

An ignition plug 103 is disposed in the combustion chamber 1a of the engine 1. An ignition timing of the ignition plug 103 is adjusted by an igniter 104. The igniter 104 is controlled by the ECU 8 (8A). A cylinder block 1c of the engine 1 includes a water temperature sensor 121 that detects an engine water temperature (cooling water temperature).

To the combustion chamber 1a of the engine 1, an intake path 11 and an exhaust path 12 are connected. An intake valve 13 is provided between the intake path 11 and the combustion chamber 1a. The intake valve 13 is driven to open and close so as to communicate and disconnect between the intake path 11 and the combustion chamber 1a. An exhaust valve 14 is provided between the exhaust path 12 and the combustion chamber 1a. The exhaust valve 14 is driven to open and close so as to communicate and disconnect between the exhaust path 12 and the combustion chamber 1a.

The intake path 11 of the engine 1 is provided with an air cleaner 107, an airflow meter 122, an intake air temperature sensor 123, a throttle valve 105 and the like. The throttle valve 105 adjusts an amount of intake air of the engine 1. The exhaust path 12 of the engine 1 is provided with an $O_2$ sensor 126, three-way catalysts 108 and the like. The $O_2$ sensor 126 detects an oxygen concentration in an exhaust gas.

The throttle valve 105 disposed in the intake path 11 of the engine 1 is driven by a throttle motor 106. An opening degree of the throttle valve 105 (throttle opening degree) is detected by a throttle opening degree sensor 125. The throttle motor 106 is driven and controlled by the ECU (8A).

Furthermore, the intake path 11 is provided with an injector (fuel injection valve) 102. The injector 102 is supplied with fuel (here, gasoline) from a fuel tank via a fuel pump, and then the fuel is injected to the intake path 11 by the injector 102. The injected fuel is mixed with the intake air into air-fuel mixture gas, and introduced into the combustion chamber 1a of the engine 1. The mixture gas (fuel and air) introduced into the combustion chamber 1a is ignited by the ignition plug 103 for combustion and explosion. The combustion and explosion of the mixture gas in the combustion chamber 1a causes reciprocating movement of the piston 1b in the vertical direction of the drawing, thereby the crankshaft 15 is driven to rotate.

-Clutch-

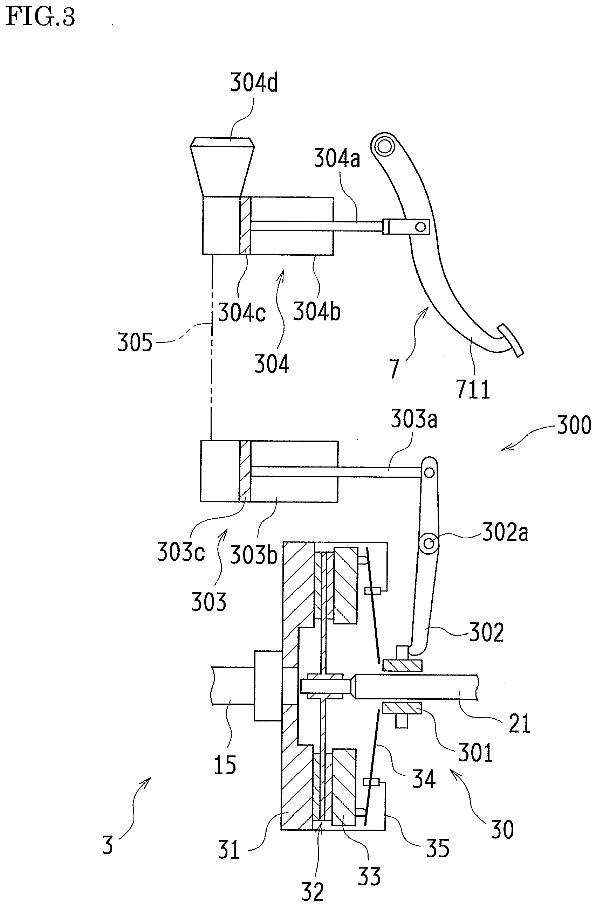

Description will be given on the configuration of the clutch 3 with reference to FIG.3. FIG. 3 is a cross-sectional view showing an example of the configuration of the clutch 3 mounted on the vehicle shown in FIG. 1. As shown in FIG. 3, the clutch 3 includes a friction clutch 30 (simply referred to as the "clutch 30") and a clutch actuating mechanism 300 that actuates the friction clutch 30 in response to a stepping operation of the clutch pedal 7.

The friction clutch 30 is configured as a dry-type single plate friction clutch, and is disposed so as to be interposed between the crankshaft 15 and the input shaft 21 of the manual transmission 2. It is possible to adopt the friction clutch 30 other than the dry-type single plate friction clutch.

The friction clutch 30 includes a flywheel 31, a clutch disc 32, a pressure plate 33, a diaphragm spring 34 and a clutch cover 35. The flywheel 31 and the clutch cover 35 are integrally rotatably attached to the crankshaft 15 serving as the input shaft of the friction clutch 30. The clutch disc 32 is splined to the input shaft 21 of the manual transmission 2 as the output shaft of the friction cultch 30. For this reason, the clutch disc 32 is integrally rotated with the input shaft 21, while it is slidable in the axial direction (left and right direction in FIG. 3). The pressure plate 33 is provided between the clutch disc 32 and the clutch cover 35. The pressure plate 33 is biased toward the flywheel 31 by the outer periphery portion of the diaphragm spring 34.

The clutch actuating mechanism 300 includes a release bearing 301, a release fork 302, a clutch release cylinder 303, a clutch master cylinder 304 and the like. The release bearing 301 is slidably attached to the input shaft 21 in the axial direction. In the vicinity of the release bearing 301, the release fork 302 is rotatably supported by a shaft 302a, one end portion (lower end portion in FIG. 3) of which makes contact with the release bearing 301. The other end portion (upper end portion in FIG. 3) of the release fork 302 is coupled to one end portion (right end portion in FIG. 3) of a rod 303a of the clutch release cylinder 303.

The clutch release cylinder 303 has a configuration in which a piston 303c and the like are incorporated in a cylinder body 303b. The piston 303c is coupled to the other end portion (left end portion in FIG. 3) of the rod 303a. The clutch release cylinder 303 is coupled to the clutch master cylinder 304 via a hydraulic pipe 305.

Similarly to the clutch release cylinder 303, the clutch master cylinder 304 has a configuration in which a piston 304c and the like are incorporated in a cylinder body 304b. The piston 304c is coupled to one end portion (left end portion in FIG. 3) of the rod 304a. The other end portion (right end portion in FIG. 3) of the rod 304a is connected to an intermediate portion of a pedal lever 711 of the clutch pedal 7. On the upper portion of the cylinder body 304b, a reserve tank 304d is disposed. The reserve tank 304d supplies a clutch fluid (oil) serving as a working fluid into the cylinder body 304b.

The clutch master cylinder 304 generates oil pressure by movement of the piston 304c in the cylinder body 304b upon receipt of an operation force by the stepping operation of the clutch pedal 7 by the driver. The oil pressure generated by the clutch master cylinder 304 is transmitted through oil in the hydraulic pipe 305 to the clutch release cylinder 303.

In the clutch 3, the release fork 302 is actuated according to the oil pressure in the clutch release cylinder 303, thereby engaging and disengaging the friction clutch 30. Specifically, in the state (clutch engaged state) shown in FIG. 3, when the stepping amount of the clutch pedal 7 becomes large, oil is supplied from the clutch master cylinder 304 to the clutch release cylinder 303, whereby the oil pressure in the clutch release cylinder 303 rises. Then, the piston 303c and the rod 303a are moved rightward in FIG. 3, and the release fork 302 is rotated (in the clockwise in FIG. 3) about the shaft 302a so that the release bearing 301 is pressed to the flywheel 31 side. Then, movement of the release bearing 301 in the above direction makes a center portion of the diaphragm spring 34 be elastically deformed in the same direction. This reduces a biasing force toward the pressure plate 33 by the diaphragm spring 34. This results in a half-clutch state, where the pressure plate 33, the clutch disc 32 and the flywheel 31 are engaged while being slipped.

In this half-clutch state, when the release bearing 301 is further moved toward the flywheel 31 side, and the biasing force toward the pressure plate 33 by the diaphragm spring 34 is further reduced, the pressure plate 33, the clutch disc 32 and the flywheel 31 are spaced apart from each other so that the clutch 30 is put into a released (disengaged) state (clutch disengaged state). In this clutch disengaged state, torque transmission from the engine 1 to the manual transmission 2 is cut off.

On the other hand, in the clutch disengaged state, when the stepping of the clutch pedal 7 is released to reduce the stepping amount of the clutch pedal 7, the oil is brought back from the clutch release cylinder 303 to the clutch master cylinder 304, whereby the oil pressure in the clutch release cylinder 303 drops. Then, the piston 303c and the rod 303a are moved leftward in FIG. 3, and the release fork 302 is rotated (in the counterclockwise in FIG. 3) about the shaft 302a, thus the release bearing 301 is moved in the direction away from the flywheel 31. This movement increases the biasing force toward the pressure plate 33 by the outer periphery portion of the diagram spring 34. This results in an increase in a frictional force between the pressure plate 33 and the clutch disc 32, and between the clutch disc 32 and the flywheel 31. The clutch 30 is put into a connected (engaged) state (clutch engaged state) by the frictional force. In this clutch engaged state, the pressure plate 33, the clutch disc 32 and the flywheel 31 are integrally rotated. Accordingly, the crankshaft 15 and the input shaft 21 are integrally rotated, thus torque is transmitted between the engine 1 and the manual transmission 2.

-Manual Transmission-

The manual transmission 2 shown in FIG. 1 is, for example, a known synchro-mesh manual transmission (for example, six forward gear stages and one backward gear stage). As shown in FIG. 1, in the manual transmission 2, the input shaft 21 is coupled to the crankshaft 15 of the engine 1 via the clutch 3. When the clutch 3 is in the engaged state, the drive force (drive torque) from the engine 1 is subjected to speed change at a predetermined speed change ratio, and then transmitted to the output shaft (drive shaft) 22.

The manual transmission 2 is operated so as to establish the shift stage corresponding to the shift position selected by manipulating the shift lever 501 of the shift device 5 as shown in FIG. 1. The shift position selected by the shift lever 501 is detected by the shift position sensor 502.

FIG. 4 is a skeleton diagram showing an example of the manual transmission 2 mounted on the vehicle shown in FIG. 1. As shown in FIG. 4, the manual transmission 2 includes the input shaft 21, the output shaft 22, six forward gear stages 201 to 206 that differ in a reduction gear ratio, one backward gear stage 207, a synchro-mesh mechanism 24A for the first-second speed shift, a synchro-mesh mechanism 24B for the third-fourth speed shift, a synchro-mesh mechanism 24C for the fifth-sixth speed shift, a casing 26 and the like.

The input shaft 21 is coupled to the crankshaft 15 of the engine 1 via the clutch 3. The output shaft 22 is coupled to the drive shaft 41 (see FIG. 1). The gear stage being selected in the transmission 2 can be determined based on the ratio of the rotational speeds (output shaft rotational speed No/input shaft rotational speed Ni) obtained from output signals of the input shaft rotational speed sensor 218 and the output shaft rotational speed sensor 411 shown in FIG. 1.

The forward gear stages 201 to 206 are formed of combination of respective drive gears 211 to 216 mounted on the input shaft 21 side and respective driven gears 221 to 226 mounted on the output shaft 22 side. The drive gears 211 to 216 mesh respectively with the driven gears 221 to 226.

The respective drive gears 211 and 212 of the first speed and the second speed are mounted on the input shaft 21 in a manner integrally rotatable therewith. On the other hand, the respective drive gears 213 to 216 of the third to sixth speeds are relatively rotatably mounted on the input shaft 21 via respective bearings (for example, cage and roller). Furthermore, the respective driven gears 221 and 222 of the first speed and the second speed are relatively rotatably mounted on the output shaft 22 via respective bearings (for example, cage and roller). On the other hand, the respective driven gears 223 to 226 of the third to sixth speeds are mounted on the output shaft 22 in a manner integrally rotatable therewith. The backward gear stage 207 includes a reverse drive gear 217, a reverse driven gear 227, a reverse idler gear 237 and the like.

-Shift Device-

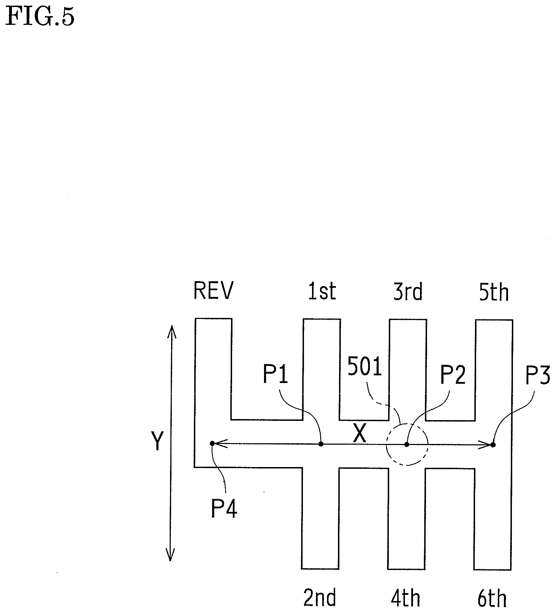

Now, description will be given on a shift pattern (a shape) of a shift gate that is disposed on a floor in a vehicle cabin and configured to guide movement of the shift lever 501 of the shift device 5. FIG. 5 is a plan view showing an example of a shift pattern (a shape) of a shift gate that guides the movement of the shift lever 501 of the shift device 5 shown in FIG. 1. FIG. 5 schematically shows the shift pattern of the manual transmission 2 having six forward gear stages and one backward gear stage. In this embodiment, the shift lever 501 can perform a select manipulation in a direction shown in FIG. 5 and a shift manipulation in a direction indicated by an arrow Y orthogonal to the direction of the select manipulation.

In the select manipulation direction indicated by an arrow X, a first-speed and second-speed select position P1, a third-speed and fourth-speed select position P2, a fifth-speed and sixth-speed select position P3 and a reverse select position P4 are arranged in a row. By the shift manipulation (manipulation in the direction indicated by the arrow Y) at the first-speed and second-speed select position P1, the shift lever 501 can be moved to a first speed position 1st or a second speed position 2nd. When the shift lever 501 is moved to the first speed position 1st, a sleeve 241 of the synchro-mesh mechanism 24A for the first-second speed shift of the manual transmission 2 is operated to an establishment side of the first speed (the right side in FIG. 4), thus establishing the first speed stage. Also, when the shift lever 501 is moved to the second speed position 2nd, the sleeve 241 of the synchro-mesh mechanism 24A for the first-second speed shift is operated to an establishment side of the second speed (the left side in FIG. 4), thus establishing the second speed stage.

Similarly, by the shift manipulation at the third-speed and fourth-speed select position P2, the shift lever 501 can be moved to a third speed position 3rd or a fourth speed position 4th. When the shift lever 501 is moved to the third speed position 3rd, the sleeve 241 of the synchro-mesh mechanism 24B for the third-fourth speed shift of the manual transmission 2 is operated to an establishment side of the third speed (the right side in FIG. 4), thus establishing the third speed stage. Also, when the shift lever 501 is moved to the fourth speed position 4th, the sleeve 241 of the synchro-mesh mechanism 24B for the third-fourth speed shift is operated to an establishment side of the fourth speed (the left side in FIG. 4), thus establishing the fourth speed stage.

Similarly, by the shift manipulation at the fifth-speed and sixth-speed select position P3, the shift lever 501 can be moved to a fifth speed position 5th or a sixth speed position 6th. When the shift lever 501 is moved to the fifth speed position 5th, the sleeve 241 of the synchro-mesh mechanism 24C for the fifth-sixth speed shift of the manual transmission 2 is operated to an establishment side of the fifth speed (the right side in FIG. 4), thus establishing the fifth speed stage. Also, when the shift lever 501 is moved to the sixth speed position 6th, the sleeve 241 of the synchro-mesh mechanism 24C for the fifth-sixth speed shift is operated to an establishment side of the sixth speed (the left side in FIG. 4), thus establishing the sixth speed stage.

Furthermore, by the shift manipulation at the reverse select position P4, the shift lever 501 can be moved to a reverse position REV. When the shift lever 501 is moved to the reverse position REV, the synchro-mesh mechanisms 24A, 24B and 24C of the manual transmission 2 are each turned into a neutral state, and the reverse idler gear 237 of the manual transmission 2 is actuated, thus establishing the backward gear stage.

In this embodiment, the third-speed and fourth-speed select position P2 serves as a neutral position. When the shift lever 501 is moved to the neutral position P2, the synchro-mesh mechanisms 24A, 24B and 24C of the manual transmission 2 are each turned into a neutral state, thus the manual transmission 2 is put into a neutral state in which no torque is transmitted between the input shaft 21 and the output shaft 22.

-Configuration of ECU-

Next, description will be given on a configuration of the ECU 8 (8A). The ECU (Electronic Control Unit) 8 (8A) includes a CPU (Central Processing Unit), a ROM (Read Only Memory), a RAM (Random Access Memory), a backup RAM and the like.

The ROM stores, for example, various control programs. The CPU reads out the various control programs stored in the ROM to execute various types of processing. The RAM is a memory for temporarily storing, for example, results of computation by the CPU. The backup RAM is a non-volatile memory that stores, for example, data to be stored when the engine 1 is stopped.

The ECU 8 (8A) is communicably connected, for example, to the engine rotational speed sensor 124, the input shaft rotational speed sensor 218, the output shaft rotational speed sensor 411, the axle rotational speed sensor 431, the neutral sensor 251, the shift stroke sensor 252, the select stroke sensor 253, the shift position sensor 502, the accelerator opening degree sensor 61 and the clutch stroke sensor 71 (see FIG. 1). See FIG. 11.

The ECU 8 (8A) is communicably connected, for example, to the injector 102, the igniter 104 for the ignition plug 103, and the throttle motor 106 for the throttle valve 105 as members that the ECU 8 should control. The ECU 8 (8A) executes various types of control on the engine 1, including fuel injection control of the injector 102, ignition timing control of the ignition plug 103 and drive control of the throttle motor 106, based on outputs of the various sensors. (See FIG. 11.)

-Configuration of Shift controller (First Embodiment)-Description will be given on a functional configuration of the ECU 8 according to the first embodiment of the present invention with reference to FIG. 6. FIG. 6 is a functional configuration diagram showing an example of the functional configuration of the ECU 8 according to the first embodiment of the present invention. The ECU 8 serves as, for example, a detection part 811, a position storage part 812, a prohibition part 813, a learning part 814 and a rotation synchronization part 815, by reading out and executing the control programs stored in the ROM and the like. Here, each of the detection part 811, the position storage part 812, the prohibition part 813, the learning part 814 and the rotation synchronization part 815 corresponds to a part of the shift controller according to the present invention.

The detection part 811 is a function part that detects the clutch stroke via the clutch stroke sensor 71. Here, the detection part 811 corresponds to a detection means recited in the scope of claims.

The position storage part 812 is a function part that stores a shift operation position St0 where a shift operation is performed while the clutch 3 is in the disengaged state. The shift operation position St0 is written in the position storage part 812 by the learning part 814, and read out from the position storage part 812 by the rotation synchronization part 815. Also, the position storage part 812 corresponds to a part of a setting/learning means recited in the scope of claims.

The prohibition part 813 is a function part that prohibits the learning part 814 from learning the shift operation position St0 when a predetermined prohibition condition is satisfied. The prohibition part 813 corresponds to a prohibition means recited in the scope of claims. Specifically, the prohibition condition means the following prohibition conditions A and B.

Prohibition condition A: The manual transmission 2 is in the neutral (N) position.

Prohibition condition B: The rotational speed Ne of the engine 1 is coincident with the input shaft rotational speed Ni of the manual transmission 2.

That is, when at least one of the prohibition conditions A and B is satisfied, the prohibition part 813 prohibits the learning part 814 from learning the shift operation position St0. It is determined whether the prohibition condition A is satisfied or not based on, for example, output of the neutral sensor 251.

Also, it is determined whether the prohibition condition B is satisfied or not based on, for example, respective outputs of the engine rotational speed sensor 124 and the input shaft rotational speed sensor 218. More specifically, the prohibition part 813 determines that the prohibition condition B is satisfied when the following formula (1) is satisfied:

$$| Ne - Ni | \leq \Delta N0 \qquad (1)$$

Here, the threshold value of the difference in the rotational speed $\Delta N0$ is set to a sufficiently small value (for example, 5rpm) compared to the rotational speed Ne of the engine 1.

When the prohibition condition A is satisfied, the operation to learn the shift operation position St0 is prohibited. Thus, the learning part 814 can be appropriately prohibited from performing the learning operation when the clutch 3 is engaged in order to increase the input shaft rotational speed Ni of the manual transmission 2 in a "double clutch operation". Here, the "double clutch operation" has the following processes: putting the shift position into neutral (N) with the clutch 3 being disengaged; stepping the accelerator pedal 6 with the clutch 3 being engaged so as to increase the engine rotational speed Ne; performing shifting down with the clutch 3 being disengaged; and engaging again the clutch 3. Thus, when the clutch 3 is engaged in order to increase the input shaft rotational speed Ni of the manual transmission 2 in the "double clutch operation", the operation to engage the clutch 3 is performed. Accordingly, in this operation, the shift operation position does not become a constant value (i.e. the shift operation position St0 cannot be obtained).

Also, when the prohibition condition B is satisfied, the operation to learn the shift operation position St0 is prohibited. Thus, the learning part 814 can be appropriately prohibited from performing the learning operation in a "clutchless shifting". Here, the "clutchless shifting" means a shift operation in which the shift position is shifted from the neutral position (N) to the travel position (for example, the third speed position 3rd) with the engine rotational speed Ne being substantially coincident with the input shaft rotational speed Ni while the clutch 3 is not disengaged (is in the engaged state). Thus, when the "clutchless shifting" is performed, though the shift operation is carried out, the clutch 3 is being engaged at the time of shifting. Accordingly, it is not possible to learn the shift operation position St0.

In the first embodiment, description is given on a case in which the prohibition part 813 determines whether the prohibition condition A is satisfied or not based on the output of the neutral sensor 251. However, the prohibition part 813 may determine whether the prohibition condition A is satisfied or not based on the output of the shift position sensor 502 instead of (or in addition to) the output of the neutral sensor 251.

In the first embodiment, description is given on a case in which the prohibition part 813 prohibits the operation to learn the shift operation position St0 when at least one of the prohibition conditions A and B is satisfied. However, the prohibition part 813 may prohibit the operation to learn the shift operation position St0 when either the prohibition condition A or the prohibition condition B is satisfied.

The learning part 814 is a function part that writes into the position storage part 812 a clutch stroke St detected by the detection part 811 as the shift operation position St0 where the shift operation is performed while the clutch 3 is in the disengaged state (i.e. a function part that performs the learning of the shift operation position St0) when the learning conditions described below (the learning condition A and the learning condition B) are satisfied. However, when the learning operation is prohibited by the prohibition part 813, the learning part 814 does not perform the learning of the shift operation position St in accordance with the prohibition instruction. The learning part 814 corresponds to the setting/learning means recited in the scope of the claims.

Learning condition A: A variation amount $\Delta St$ per unit time $\Delta T$ of the clutch stroke St is less than or equal to a predetermined first variation amount threshold value $\Delta St0$.

Learning condition B: A variation amount ($\Delta Ni/\Delta V$) per unit time $\Delta T$ of a quotient (Ni/V) obtained by dividing the input shaft rotational speed Ni of the manual transmission 2 by the vehicle speed V is more than or equal to a predetermined second variation amount threshold value ($\Delta Ni0/\Delta V0$).

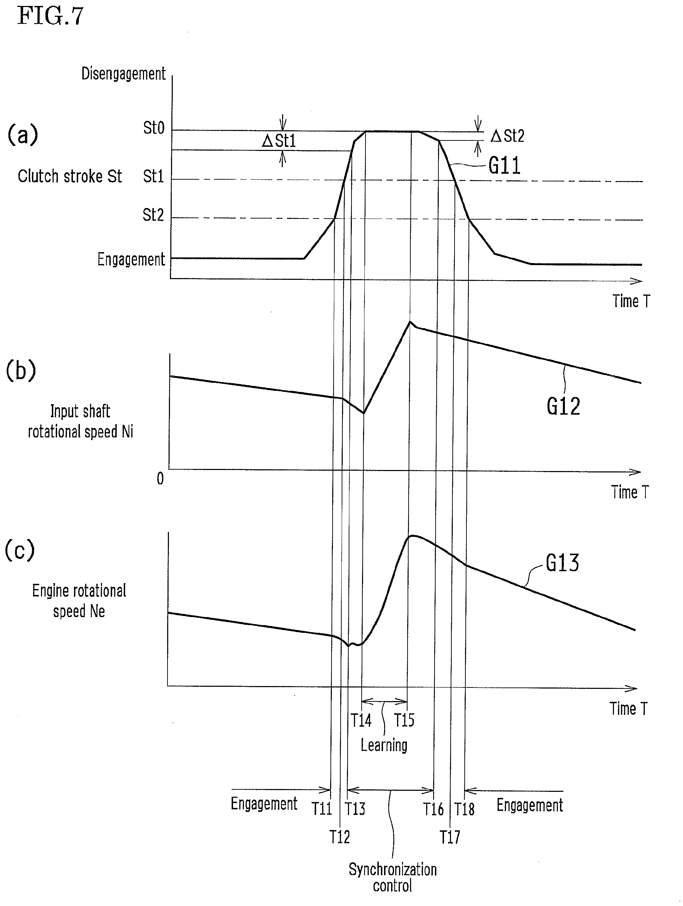

When the learning condition A is satisfied, the learning of the shift operation position St0 is performed under the condition in which the variation amount $\Delta St$ per unit time $\Delta T$ of the clutch stroke St is less than or equal to the predetermined first variation amount threshold value $\Delta St0$. Thus, by appropriately setting the first variation amount threshold value $\Delta St0$, the learning of the shift operation position St0 can be performed, for example, when the stepping amount of the clutch pedal 7 changes little (see FIG. 7(a)). That is, the driver does not change the stepping amount of the clutch pedal 7 so as to perform the shift operation when the clutch stroke St reaches the shift operation position St0. Therefore, an appropriate value of the shift operation position St0 can be learned by performing the learning of the shift operation position St0 when the stepping amount of the clutch pedal 7 changes little.

When the learning condition B is satisfied, the learning of the shift operation position St0 is performed under the condition in which the variation amount ($\Delta Ni/\Delta V$) per unit time $\Delta T$ of the quotient (Ni/V) obtained by dividing the input shaft rotational speed Ni of the manual transmission 2 by the vehicle speed V is more than or equal to the predetermined second variation amount threshold value ($\Delta Ni0/\Delta V0$). Also, at the shift operation position StO, by performing the shift operation, the variation amount ($\Delta Ni/\Delta V$) per unit time $\Delta T$ of the quotient (Ni/V) obtained by dividing the input shaft rotational speed Ni of the manual transmission 2 by the vehicle speed V becomes large (see FIG. 7 (b)). Thus, by appropriately setting the second variation amount threshold value ($\Delta Ni0/\Delta V0$), the learning of the shift operation position St0 can be appropriately performed.

In the first embodiment, description is given on a case in which the learning part 814 performs the learning of the shift operation position St0 when the learning conditions A and B are satisfied. However, the learning part 814 may perform the learning of the shift operation position St0 when the learning condition A and the following learning condition C, which replaces (or is added to) the learning condition B, are satisfied.

Learning condition C: A variation amount ($\Delta Ne/\Delta V$) per unit time $\Delta T$ of a quotient (Ne/V) obtained by dividing the rotational speed Ne of the engine 1 by the vehicle speed V is more than or equal to a predetermined third variation amount threshold value ($\Delta Ne0/\Delta V0$).

When the learning condition C is satisfied, the learning of the shift operation position St0 is performed under the condition in which the variation amount ($\Delta Ne/\Delta V$) per unit time $\Delta T$ of the quotient (Ne/V) obtained by dividing the rotational speed Ne of the engine 1 by the vehicle speed V is more than or equal to the predetermined third variation amount threshold value ($\Delta Ne0/\Delta V0$). Also, at the shift operation position St0, by performing the shift operation, the variation amount ($\Delta Ne/\Delta V$) per unit time $\Delta T$ of the quotient (Ne/V) obtained by dividing the rotational speed Ne of the engine 1 by the vehicle speed V becomes large (see FIG. 7 (a)). Thus, by appropriately setting the third variation amount threshold value ($\Delta Ne0/\Delta V0$), the learning of the shift operation position St0 can be appropriately performed.

In the first embodiment, description is given on a case in which the learning part 814 performs the learning of the shift operation position St0 when the learning conditions A and B are satisfied. However, the learning part 814 may perform the learning of the shift operation position St0 when the learning condition A and the following learning condition D, which replaces (or is added to) the learning condition B, are satisfied.

Learning condition D: an absolute value $|\Delta Ni|$ of the variation amount $\Delta Ni$ per unit time $\Delta T$ of the input shaft rotational speed Ni of the manual transmission 2 is changed from a value less than a predetermined fourth variation amount threshold value ΔNi0 to a value more than or equal to a predetermined fifth variation amount threshold value ΔNi1 that is more than or equal to the fourth variation amount threshold value ΔNi0.

When the learning condition D is satisfied, the learning of the shift operation position St0 is performed under the condition in which the absolute value |ΔNi| of the variation amount ΔNi per unit time ΔT of the input shaft rotational speed Ni of the manual transmission 2 is changed from a value less than the predetermined fourth variation amount threshold value ΔNi0 to a value more than or equal to the predetermined fifth variation amount threshold value ΔNi1 that is more than or equal to the fourth variation amount threshold value ΔNi0. Also, at the shift operation position St0, by performing the shift operation, the absolute value |ΔNi| of the variation amount ΔNi per unit time ΔT of the input shaft rotational speed Ni of the manual transmission 2 becomes large (see FIG. 7 (b)). Thus, by appropriately setting the fourth variation amount threshold value ΔNi0 and the fifth variation amount threshold value ΔNi1, the learning of shift operation position St0 can be appropriately performed.

The rotation synchronization part 815 is a function part that performs rotation synchronization control to synchronize the rotational speed Ne of the engine 1 with the input shaft rotational speed Ni of the manual transmission 2 at the time of shifting. Here, the rotation synchronization part 815 corresponds to a rotation synchronization means recited in the scope of claims. Specifically, when the clutch 3 is switched from the engaged state to the disengaged state at the time of shifting, the rotation synchronization part 815 starts the rotation synchronization control under the condition in which the detection part 811 detects that the clutch stroke St reaches the position of a first stroke ΔSt1 that is set in advance on a side more engaged than the shift operation position St0 (see FIG. 7(c)).

After the shift operation is performed in a state in which the clutch stroke St is at the shift operation position St0, when the clutch 3 is switched from the disengaged state to the engaged state, the rotation synchronization part 815 terminates the rotation synchronization control under the condition in which it is detected that the clutch stroke St detected by the detection part 811 reaches the position of a second stroke ΔSt2 that is set in advance on a side more engaged than the shift operation position St0 (see FIG. 7(c)). The rotation synchronization part 815 determines whether it is the time of shifting or not based on, for example, the rotational speed Ne of the engine 1 is not coincident with the input shaft rotational speed Ni of the manual transmission 2 (that is, the clutch 3 is not in the engaged state). Specifically, it is determined whether the following formula (2) is satisfied or not:

$$|\,Ne - Ni\,| \geq \Delta N1 \qquad\qquad (2)$$

Here, the threshold value of the difference in the rotational speed ΔN0 is set to a sufficiently small value (for example, 5rpm) compared to the rotational speed Ne of the engine 1.

Like this, when the clutch 3 is switched from the engaged state to the disengaged state at the time of shifting, the rotation synchronization control to synchronize the rotational speed Ne of the engine 1 with the input shaft rotational speed Ni of the manual transmission 2 is started under the condition in which the detection part 811 detects that the clutch stroke St reaches the position of the first stroke ΔSt1 that is set in advance on the side more engaged than the shift operation position St0. Thus, by appropriately setting the shift operation position St0 and the first stroke ΔSt1, a shock when the clutch 3 is fastened can be certainly prevented.

Also, after the shift operation is performed in the state in which the clutch stroke St is at the shift operation position St0, when the clutch 3 is switched from the disengaged state to the engaged state, the rotation synchronization control to synchronize the rotational speed Ne of the engine 1 with the input shaft rotational speed Ni of the manual transmission 2 is terminated under the condition in which it is detected that the clutch stroke St reaches the position of the second stroke ΔSt2 that is set in advance on the side more engaged than the shift operation position St0. Thus, by appropriately setting the shift operation position St0 and the second stroke ΔSt2, it is possible to terminate the rotation synchronization control at an appropriate timing.

-Operation of Shift controller (First Embodiment) (Timing Chart) -

Description will be given on an operation of the shift controller (ECU 8) shown in FIG. 6 with reference to FIG. 7. FIG. 7 is a timing chart showing an example of the operation of the ECU 8 shown in FIG. 6. FIG. 7(a) is a graph G11 that indicates variation of the clutch stroke St. The upper side of the vertical axis thereof is the disengaged side, and the lower side of the vertical axis is the engaged side. Also, on the vertical axis of the graph are indicated an engagement start position St1 that is the clutch stroke St at which the engagement is started, a complete engagement position St2 that is the clutch stroke St at which the clutch 3 is completely engaged (clutch 3 is not being slipped), and the shift operation position St0 where the shift operation is performed while the clutch 3 is in the disengaged state. FIG. 7(b) is a graph G12 that indicates variation of the input shaft rotational speed Ni of the manual transmission 2. FIG. 7(c) is a graph G13 that indicates variation of the rotational speed Ne of the engine 1.

Until the timing T11, as shown in the graph G11, the clutch 3 is in the engaged state due to the clutch stroke St being on the side more engaged than the complete engagement position St2. As shown in the graphs G12 and G13, the rotational speed Ne of the engine 1 is coincident with the input shaft rotational speed Ni of the manual transmission 2. And, at the timing T11, as shown in the graph G11, the clutch stroke St reaches the complete engagement position St2. Then, at the timing T12, as shown in the graph G11, the clutch stroke St reaches the engagement start position St1, and as shown in the graph G12, the deceleration ratio of the input shaft rotational speed Ni of the manual transmission 2 is increased due to the manual transmission 2 being in the neutral (N) position.

Then, at the timing T13, as shown in the graph G11, the clutch stroke St reaches the position of the first stroke ΔSt1 on the side more engaged than the shift operation position StO, thus the synchronization part 815 starts the rotation synchronization control to synchronize the rotational speed Ne of the engine 1 with the input shaft rotational speed Ni of the manual transmission 2. Then, at the timing T14, the shift operation (here, the shift down operation from the third speed 3rd to the second speed 2nd) is started, and as shown in the graph G12, the input shaft rotational speed Ni of the manual transmission 2 is drastically increased. After that, at the timing T15, the shift operation (here, the shift down operation from the third speed 3rd to the second speed 2nd) is terminated, and as shown in the graph G12, the input shaft rotational speed Ni of the manual transmission 2 starts to be decreased. During the time period from the timing T14 to the timing T15, as shown in the graph G12, the clutch stroke St is fixed to the shift operation position St0. And, neither the prohibition condition A nor the prohibition condition B is satisfied, and furthermore both the learning conditions A and B are satisfied, thus, the learning part 814 performs the learning of the shift operation position St0.

After that, at the timing T16, as shown in the graph G11, the clutch stroke St reaches the position of the second stroke ΔSt2 on the side more engaged than the shift operation position St0. Accordingly, the rotation synchronization part 815 terminates the rotation synchronization control to synchronize the rotational speed Ne of the engine 1 to the input shaft rotational speed Ni of the manual transmission 2. Then, at the timing T17, as shown in the graph G11, the clutch stroke St reaches the engagement start position St1, and at the timing T18, as shown in the graph G11, the clutch stroke St reaches the complete engagement position S2. After the timing T18, as shown in the graph G11, the clutch stroke St is on the side more engaged than the complete engagement position S2. Thus, the clutch 3 is in the engaged state, and as shown in the graphs G12 and 13, the rotational speed Ne of the engine 1 is coincident with the input shaft rotational speed Ni of the manual transmission 2.

-Operation of Shift Controller (First Embodiment) (Flowchart)-

-Operation of Learning Processing-

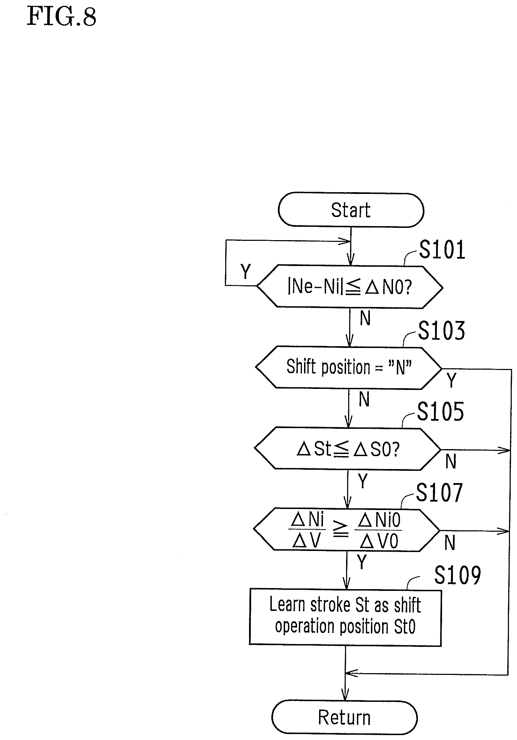

Here, description will be given on the learning operation of the shift controller (ECU 8) shown in FIG. 6 with reference to FIG. 8. FIG. 8 is a flowchart showing an example of the learning operation of the ECU 8 shown in FIG. 6. First, the prohibition part 813 determines whether the condition in which the rotational speed Ne of the engine 1 is coincident with the input shaft rotational speed Ni of the manual transmission 2 (prohibition condition B: $|Ne - Ni| \leq \Delta N0$) is satisfied (step S101). If it is determined YES in step S101, the processing is in the standby state. If it is determined NO in step S101, the processing advances to step S103.

Then, the prohibition part 813 determines whether the condition in which the manual transmission 2 is in the neutral position (N) (prohibition condition A) is satisfied (step S103). If it is determined YES in step S103, the processing returns. If it is determined NO in the step S103, the processing advances to step S105. Subsequently, the learning part 814 determines whether the condition in which the variation amount ΔSt per unit time ΔT of the clutch stroke St is less than or equal to the predetermined first variation amount threshold value ΔSt0 (learning condition A) is satisfied (step S105). If it is determined NO in step S105, the processing returns. If it is determined YES in step S105, the processing advances to step S107.

Subsequently, the learning part 814 determines whether the condition in which the variation amount (ΔNi/ΔV) per unit time ΔT of the quotient (Ni/V) obtained by dividing the input shaft rotational speed Ni of the manual transmission 2 by the vehicle speed V is more than or equal to the predetermined second variation amount threshold value (ΔNi0/ΔV0) (learning condition B) is satisfied (step S107). If it is determined NO in step S107, the processing returns. If it is determined YES in step S107, the processing advances to step S109. Then, the learning part 814 writes, into the position storage part 812, the clutch stroke St detected by the detection part 811 as the shift operation position St0 where the shift operation is performed while the clutch 3 is in the disengaged state (that is, the learning of the shift operation position St0 is performed) (step S109). After that, the processing returns.

Like this, the learning part 814 performs the learning of the shift operation position St0 when the learning condition A (condition in which the stepping amount of the clutch pedal 7 is substantially fixed) and the learning condition B (condition in which the shift operation is performed) are satisfied. Thus, the learning of the shift operation position St0 is appropriately performed (see FIG. 7(a)).

-Operation of Rotation Synchronization Control-

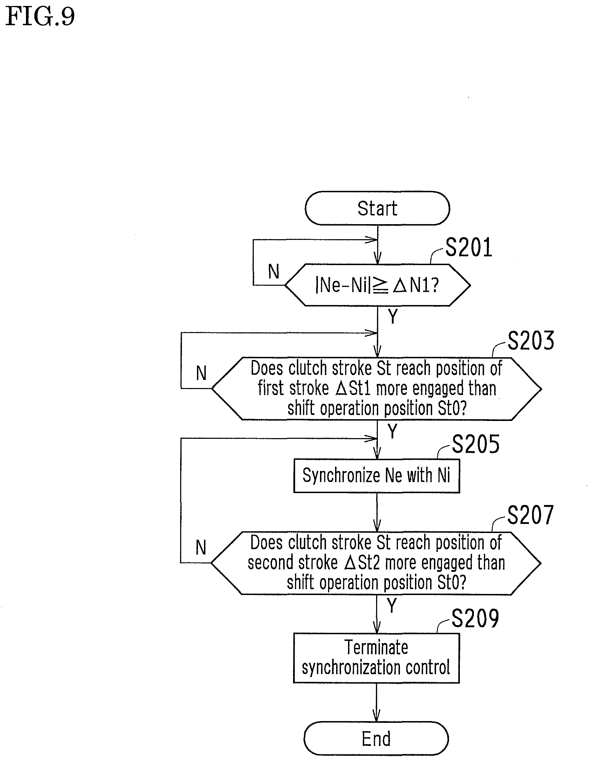

Here, description will be given on an operation of the rotation synchronization control of the shift controller (ECU 8) shown in FIG. 6 with reference to FIG. 9. FIG. 9 is a flowchart showing an example of the operation of rotation synchronization control by the ECU shown in FIG. 6. The following series of processing is performed by the rotation synchronization part 815. First, it is determined whether the condition in which the rotational speed Ne of the engine 1 is not coincident with the input shaft rotational speed Ni of the manual transmission 2 (condition in which the clutch 3 is not in the engaged state) is satisfied (step S201). If it is determined NO in step S201, the processing is in the standby state. If it is determined YES in step S201, the processing advances to step S203.

Then, when the clutch 3 is switched from the engaged state to the disengaged state, it is determined whether the clutch stroke St reaches the position of the first stroke ΔSt1 on the side more engaged than the shift operation position St0 (step S203). If it is determined No in step S203, the processing is in the standby state. If it is determined YES in step S203, the processing advances to step S205. Subsequently, the rotation synchronization control to synchronize the rotational speed Ne of the engine 1 with the input shaft rotational speed Ni of the manual transmission 2 is started (step S205). Then, the shift operation is performed, and when the clutch 3 is switched from the disengaged state to the engaged state, it is determined whether the clutch stroke St reaches the position of the second stroke ΔSt2 on the side more engaged than the shift operation position St0 (step S207). If it is determined NO in step S207, the processing returns to step S205 and the rotation synchronization control is continuously performed. If it is determined YES in step S207, the processing advances to step S209. Then, the rotation synchronization control to synchronize the rotational speed Ne of the engine 1 with the input shaft rotational speed Ni of the manual transmission 2 is terminated (step S209), thus the processing is terminated.

Thus, when the clutch 3 is switched from the engaged state to the disengaged state at the time of shifting, the rotation synchronization control to synchronize the rotational speed Ne of the engine 1 with the input shaft rotational speed Ni of the manual transmission 2 is started under the condition in which the clutch stroke St reaches the position of the first stroke ΔSt1 that is set in advance on the side more engaged than the shift operation position St0 where the shift operation is performed while the clutch 3 is in the disengaged state. Thus, by appropriately setting the shift operation position St0 and the first stroke ΔSt1, the shock when the clutch 3 is fastened can be certainly prevented.

-Another Embodiment of Learning Condition-

Here, description will be given on another embodiment of the learning condition that is a condition under which the learning part 814 performs the learning of the shift operation position St0 with reference to FIG. 10. FIG. 10 is a timing chart showing an example of another embodiment of the learning condition in the learning part 814 shown in FIG. 6. In the shift controller (ECU 8) according to the first embodiment shown in FIG. 6, the description was given on the case in which the learning part 814 performs the learning of the shift operation position St0 when the learning conditions A and B are satisfied. However, the learning part 814 may perform the learning of the shift operation position St0 when the learning condition A and the following learning condition E, which replaces (or is added to) the learning condition B, are satisfied.

Learning condition E: A second-order differential value ND2 of the input shaft rotational speed Ni of the manual transmission 2 is more than or equal to a predetermined first positive differential threshold value DF1 and furthermore a first-order differential value ND of the input shaft rotational speed Ni of the manual transmission 2 is more than or equal to a predetermined second positive differential threshold value DF2, and after that, the second-order differential value ND2 of the input shaft rotational speed Ni of the manual transmission 2 is less than or equal to a predetermined third negative differential threshold value DF3.

FIG. 10 (a) is a graph G21, which is the same as FIG. 7(a), and indicates variation of the clutch stroke St. The upper side of the vertical axis thereof is the disengaged side, and the lower side of the vertical axis is the engaged side. Also, on the vertical axis of the graph are indicated the engagement start position St1 that is the clutch stroke St at which the engagement is started, and the shift operation position St0 where the shift operation is performed while the clutch 3 is in the disengaged state. FIG. 10(b) is a graph G22, which is the same as FIG. 7(b), and indicates variation of the input shaft rotational speed Ni of the manual transmission 2. FIG. 10(c) is a graph G23 that indicates variation of the first-order differential value ND1 of the input shaft rotational speed Ni of the manual transmission 2. FIG. 10(d) is a graph G24 that indicates variation of the second-order differential value ND2 of the input shaft rotational speed Ni of the manual transmission 2.

Until the timing T21, as shown in the graph G21, the clutch 3 is in the engaged state due to the clutch stroke St being on the side more engaged than the complete engagement position S2, and the rotational speed Ne of the engine 1 is coincident with the input shaft rotational speed Ni of the manual transmission 2. And, at the timing T21, as shown in the graph G21, the clutch stroke St reaches the complete engagement position S2.

Then, at the timing T22, as shown in the graph G21, the clutch stroke St reaches the engagement start position St1, and as shown in the graph G22, the deceleration ratio of the input shaft rotational speed Ni of the manual transmission 2 is increased due to the manual transmission 2 being in the neutral (N) position. Furthermore, since the deceleration ratio of the input shaft rotational speed Ni is increased at the timing T22, as shown in the graph G23, the first-order differential value ND1 of the input shaft rotational speed Ni of the manual transmission 2 is decreased, and as shown in the graph G24, the second-order differential value ND2 of the input shaft rotational speed Ni of the manual transmission 2 has a low impulse waveform on the negative side.

Then, at the timing T23, the shift operation (for example, the shift down operation from the third speed 3rd to the second speed 2nd) is started, and as shown in the graph G22, the input shaft rotational speed Ni of the manual transmission 2 is increased. Thus, at the timing T23, as shown in the graph G23, the first-order differential value ND1 of the input shaft rotational speed Ni of the manual transmission 2 is increased in a stepwise manner to a positive value. Also, as shown in the graph G24, the second-order differential value ND2 of the input shaft rotational speed Ni of the manual transmission 2 has a high impulse waveform on the positive side. Therefore, at the timing T23, as shown in the graph G24, the second-order differential value ND2 of the input shaft rotational speed Ni of the manual transmission 2 is more than or equal to the first positive differential threshold value DF1 and furthermore, as shown in the graph G23, the first-order differential value ND of the input shaft rotational speed Ni of the manual transmission 2 is more than or equal to the predetermined second positive differential threshold value DF2.

Subsequently, at the timing T24, the shift operation (for example, the shift down operation from the third speed 3rd to the second speed 2nd) is terminated, and as shown in the graph G22, the input shaft rotational speed Ni of the manual transmission 2 starts to be decreased. Thus, at the timing T24, as shown in the graph G23, the first-order differential value ND1 of the input shaft rotational speed Ni of the manual transmission 2 is decreased in a stepwise manner to a negative value. Also, as shown in the graph G24, the second-order differential value ND2 of the input shaft rotational speed Ni of the manual transmission 2 has a high impulse waveform on the negative side. Therefore, at the timing T24, as shown in the graph G24, the second-order differential value ND2 of the input shaft rotational speed Ni of the manual transmission 2 is less than or equal to the third negative differential threshold value DF3, thus the learning condition E is satisfied.

-Configuration of Shift Controller (Second Embodiment)-

Here, description will be given on a functional configuration of the ECU 8A according to a second embodiment of the present invention with reference to FIG. 11. FIG. 11 is a functional configuration diagram showing an example of a functional configuration of the ECU 8A according to the second embodiment of the present invention. The ECU 8A serves as, for example, a detection part 821, a prohibition part 823, a setting part 824 and a rotation synchronization part 825, by reading out and executing the control programs stored in the ROM and the like. Here, each of the detection part 821, the prohibition part 823, the setting part 824 and the rotation synchronization part 825 corresponds to a part of the shift controller according to the present invention.

The ECU 8A differs from the ECU 8 shown in FIG. 6 in that it has the setting part 824 instead of the position storage part 812 and the learning part 814. The detection part 821, the prohibition part 823 and the rotation synchronization part 825 have, respectively, the substantially same functions as the detection part 811, the prohibition part 813 and the rotation synchronization part 815 of the ECU 8 shown in FIG. 6. Therefore, description on the different functions will be given here, but description on the same functions is omitted.

The prohibition part 823 is a functional part that prohibits the setting part 824 from setting the shift operation position St0 when at least one of the prohibition conditions A and B that are described with reference to FIG. 6 is satisfied. The prohibition part 823 corresponds to the prohibition means recited in the scope of claims.

In the second embodiment, description is given on a case in which the prohibition part 823 prohibits the operation to set the shift operation position St0 when at least one of the prohibition conditions A and B is satisfied. However, the prohibition part 823 may prohibit the operation to set the shift operation position St0 when either the prohibition condition A or the prohibition condition B is satisfied.

The setting part 824 is a functional part that sets the clutch stroke St detected by the detection part 821 as the shift operation position St0 when the learning conditions A and B described with reference to FIG. 6 are satisfied. The setting part 824 corresponds to the setting/learning means recited in the scope of claims.

In the second embodiment, description is given on a case in which the setting part 824 performs the setting of the shift operation position St0 when the learning conditions A and B are satisfied. However, the setting part 824 may perform the setting of the shift operation position St0 when the learning condition A and the learning condition C described with reference to FIG. 6, which replaces (or is added to) the learning condition B, are satisfied. Also, the setting part 824 may perform the learning of the shift operation position St0 when the learning condition A and the learning condition D described with reference to FIG 6, which replaces (or is added to) the learning condition B, are satisfied. Furthermore, the setting part 824 may perform the learning of the shift operation position St0 when the learning condition A and the learning condition E described with reference to FIG 10, which replaces (or is added to) the learning condition B, are satisfied.

The rotation synchronization part 825 is a function part that performs rotation synchronization control to synchronize the rotational speed Ne of the engine 1 with the input shaft rotational speed Ni of the manual transmission 2 at the time of shifting. Here, the rotation synchronization part 825 corresponds to the rotation synchronization means recited in the scope of claims. Specifically, when the clutch 3 is switched from the engaged state to the disengaged state at the time of shifting, the rotation synchronization part 825 starts the rotation synchronization control under the condition in which the detection part 821 detects that the clutch stroke St reaches the shift operation position St0 (i.e. in which the setting part 824 sets the shift operation position St0). After the shift operation is performed in the state in which the clutch stroke St is at the shift operation position St0, when the clutch 3 is switched from the disengaged state to the engaged state, the rotation synchronization part 825 terminates the rotation synchronization control under the condition in which it is detected that the clutch stroke St detected by the detection part 821 reaches the position of the second stroke $\Delta St2$ that is set in advance on the side more engaged than the shift operation position St0.

The learning part 814 shown in FIG. 6 performs the learning of the shift operation position St0 where the shift operation is performed while the clutch 3 is in the disengaged state. In contrast to the learning part 814, the setting part 824 sets the shift operation position St0. For this reason, every time the shift operation is performed, the appropriate shift operation position St0 is set based on the operation performed at that time and the state of the vehicle (for example, a temperature and an abrasion degree of the clutch disc 32 of the clutch 3 (see FIG. 3)). Therefore, even if the shift operation position St0 differs every time the shift operation is performed, the rotation synchronization control can be performed at an appropriate timing.

-Operation of Shift Controller (Second Embodiment)-

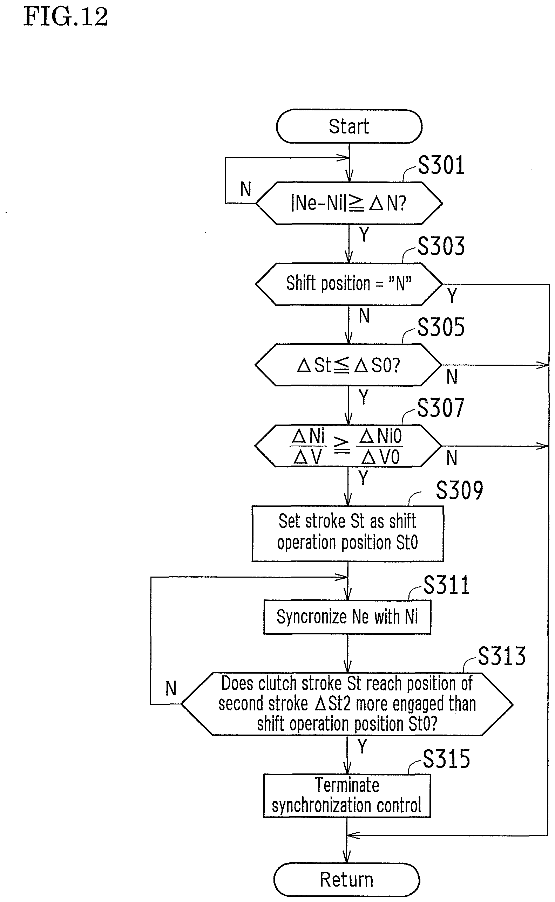

Here, description will be given on the learning operation of the shift controller (ECU 8A) shown in FIG. 11 with reference to FIG. 12. FIG. 12 is a flowchart showing an example of the learning operation of the ECU 8A shown in FIG. 11. First, the prohibition part 823 determines whether the condition in which the rotational speed Ne of the engine 1 is coincident with the input shaft rotational speed Ni of the manual transmission 2 (prohibition condition B: $|Ne - Ni| \leq \Delta N0$) is satisfied (step S301). If it is determined YES in step S301, the processing is in the standby state. If it is determined NO in step S301, the processing advances to step S303.

Then, the prohibition part 823 determines whether the condition in which the manual transmission 2 is in the neutral position (N) (prohibition condition A) is satisfied (step S303). If it is determined YES in step S303, the processing returns. If it is determined NO in step S303, the processing advances to step S305. Subsequently, the setting part 824 determines whether the condition in which the variation amount $\Delta St$ per unit time $\Delta T$ of the clutch stroke St is less than or equal to the predetermined first variation amount threshold value $\Delta St0$ (learning condition A) is satisfied (step S305). If it is determined NO in step S305, the processing returns. If it is determined YES in step S305, the processing advances to step S307.

Subsequently, the setting part 824 determines whether the condition in which the variation amount ($\Delta Ni/\Delta V$) per unit time $\Delta T$ of the quotient (Ni/V) obtained by dividing the input shaft rotational speed Ni of the manual transmission 2 by the vehicle speed V is more than or equal to the predetermined second variation amount threshold value ($\Delta Ni0/\Delta V0$) (learning condition B) is satisfied (step S307). If it is determined NO in step S307, the processing returns. If it is determined YES in step S307, the processing advances to step S309. Then, the setting part 824 sets the clutch stroke St detected by the detection part 811 as the shift operation position St0 where the shift operation is performed while the clutch 3 is in the disengaged state (step S309).

Then, the rotation synchronization part 825 starts the rotation synchronization control to synchronize the rotational speed Ne of the engine 1 with the input shaft rotational speed Ni of the manual transmission 2 (step S311). Then, the shift operation is performed, and the rotation synchronization part 825 determines whether the clutch stroke St reaches the position of the second stroke $\Delta St2$ on the side more engaged than the shift operation position St0 (step S313). If it is determined NO in step S313, the processing returns to step S311. If it is determined YES in step S313, the processing advances to step S315. Then, the rotation synchronization part 825 terminates the rotation synchronization control to synchronize the rotational speed Ne of the engine 1 with the input shaft rotational speed Ni of the manual transmission 2 (step S315), thus the processing returns.

Like this, the shift operation position St0 is set and the rotation synchronization control is started to synchronize the rotational speed Ne of the engine 1 with the input shaft rotational speed Ni of the manual transmission 2 when the learning conditions A and B are satisfied at the time of shifting. Thus, the shock when the clutch 3 is fastened can be certainly prevented.

-Other Embodiments-

In the first embodiment, the description was given on the case in which the ECU 8 functions as the detection part 811, the position storage part 812, the prohibition part 813, the learning part 814 and the rotation synchronization part 815. However, at least one of the detection part 811, the position storage part 812, the prohibition part 813, the learning part 814 and the rotation synchronization part 815 may be configured by hardware such as an electronic circuit. Likewise, in the second embodiment, the description was given on the case in which the ECU 8A functions as the detection part 821, the prohibition part 823, the setting part 824 and the rotation synchronization part 825. However, at least one of the detection part 821, the prohibition part 823, the setting part 824 and the rotation synchronization part 825 may be configured by hardware such as an electronic circuit.

In the first embodiment, the description was given on the case in which the ECU 8 (learning part 814) performs the learning of the shift operation position St0. However, the ECU 8 (learning part 814) may perform the learning and the setting of the shift operation position St0. For example, the ECU 8 (learning part 814) may perform the learning and the setting of the shift operation position St0 when the learning conditions A and B are satisfied, while the shift operation position St0 stored in the position storage part 812 may be used when the shift operation position St0 is used under the condition in which the learning conditions A and B are not satisfied,.

In the first embodiment, the description was given on the case in which the ECU 8 (learning part 814) writes the shift operation position St0 into the position storage part 812 when the learning conditions A and B are satisfied. However, the ECU 8 (learning part 814) may perform the learning in another manner. For example, the ECU 8 (learning part 814) may perform the learning of an average of the respective shift operation positions St0 obtained by the past travels using the following formula (3):

$$\text{St0} \leftarrow (\text{St0 (N)} + \text{St (N-1)} \times \text{(N-1)})/\text{N} \qquad (3)$$

Here, the shift operation position St0 (N) represents a learned value of the Nth shift operation position St0. In this case, the more appropriate shift operation position St0 can be obtained.

In each of the first embodiment and the second embodiment, the description was given on the case in which one (fixed) driver drives the vehicle. If there are at least two drivers (i.e. at least two drivers take turns to drive the vehicle), it is preferable to learn and set each shift operation position St0 for the corresponding driver. Thus, in such a case, each driving characteristic depending on the corresponding driver can be reflected when performing the rotation synchronization control. The driver may be identified based on, for example, a position of the driver's sheet. Also, the driver may be identified based on identification information given to each driver, which is input by the driver him/herself.

In each of the first embodiment and the second embodiment, the description was given on the case in which the internal combustion engine is the gasoline engine 1. However, the internal combustion engine may be another kind of the internal combustion engine (for example, a diesel engine).

Industrial Applicability

The present invention can be used for a shift controller for a vehicle on which are mounted an engine, a manual transmission and a clutch that is disposed between the engine and the manual transmission and that is capable of switching between a disengaged state and an engaged state, the shift controller that stops the engine when an operation to instruct to stop the engine is performed during travel of the vehicle.

Description of Reference Numerals

| | |
|---|---|
| 1 | Engine |
| 124 | Engine rotational speed sensor (part of shift controller) |
| 2 | Manual transmission |
| 21 | Input shaft |
| 218 | Input shaft rotational speed sensor (part of shift controller) |
| 22 | Output shaft |
| 251 | Neutral sensor (part of shift controller) |
| 3 | Clutch |
| 30 | Friction clutch |
| 5 | Shift device |
| 502 | Shift position sensor |
| 6 | Accelerator pedal |

| 61 | Accelerator opening degree sensor |
|---|---|
| 7 | Clutch pedal |
| 71 | Clutch stroke sensor (part of shift controller) |
| 8 | ECU (part of shift controller) |
| 811 | Detection part (detection means) |
| 812 | Position storage part (part of setting/learning means) |
| 813 | Prohibition part (prohibition means) |
| 814 | Learning part (part of setting/learning means) |
| 815 | Rotation synchronization part (rotation synchronization means) |
| 8A | ECU (Part of shift controller) |
| 821 | Detection part (detection means) |
| 823 | Prohibition part (Prohibition means) |
| 824 | Setting part (setting/learning means) |
| 825 | Rotation synchronization part (rotation synchronization means) |
| Ne | Engine rotational speed |
| Ni | Input shaft rotational speed |
| St | Clutch stroke |
| St0 | Shift operation position |

## Claims

1. A shift controller (124, 218, 251, 71, 8, 8A) for a vehicle comprising an internal combustion engine (1), a manual transmission (2) and a clutch (3) that is disposed between the internal combustion engine (1) and the manual transmission (2) and that is capable of switching between an engaged state and a disengaged state by changing a clutch stroke, the shift controller (124, 218, 251, 71, 8, 8A) comprising:

   a detection means (811, 821) detecting the clutch stroke;
   a rotation synchronization means (815, 825) performing rotation synchronization control to synchronize a rotational speed of the internal combustion engine (1) with an input shaft rotational speed of the manual transmission (2); and
   wherein, when the clutch (3) is switched from the engaged state to the disengaged state, the rotation synchronization means (815, 825) starts the rotation synchronization control under a condition in which the detection means (811, 821) detects that the clutch stroke reaches a position of a first stroke that is set in advance on a side more engaged than the shift operation position where a shift operation is performed while the clutch (3) is in the disengaged state,
   **characterized in that** the shift controller (124, 218, 251, 71, 8, 8A) further comprises
   a setting/learning means (812, 814, 824) performing at least one of a setting and a learning of a shift operation position under a condition in which a variation amount per unit time of the clutch stroke is less than or equal to a predetermined first variation amount threshold value,
   wherein, as performance of the learning of the shift operation position, the setting/learning means (812, 814, 824) learns, as the shift operation position, the clutch stroke detected by the detection means (811, 821) under the condition in which the variation amount per unit time of the clutch stroke is less than or equal to the predetermined first variation amount threshold value.

2. The shift controller (124, 218, 251, 71, 8, 8A) according to claim 1, wherein, when the clutch (3) is switched from the disengaged state to the engaged state, the rotation synchronization means (815, 825) terminates the rotation synchronization control under a condition in which the detection means (811, 821) detects that the clutch stroke reaches a position of a second stroke that is set in advance on the side more engaged than the shift operation position.

3. The shift controller (124, 218, 251, 71, 8, 8A) according to claim 1, wherein the setting/learning means (812, 814, 824) performs at least one of the setting and the learning of the shift operation position under a condition in which a variation amount per unit time of a quotient obtained by dividing the input shaft rotational speed of the manual transmission (2) by a vehicle speed is more than or equal to a predetermined second variation amount threshold value.

4. The shift controller (124, 218, 251, 71, 8, 8A) according to any one of claims 1 to 3, wherein the setting/learning means (812, 814, 824) performs at least one of the setting and the learning of the shift operation position under a condition in which a variation amount per unit time of a quotient obtained by dividing the rotational speed of the internal combustion engine (1) by a vehicle speed is more than or equal to a predetermined third variation amount threshold value.

5. The shift controller (124, 218, 251, 71, 8, 8A) according to any one of claims 1 to 4, wherein the setting/learning means (812, 814, 824) performs at least one of the setting and the learning of the shift operation position under a condition in which an absolute value of a variation amount per unit time of the input shaft rotational speed of the manual transmission (2) is changed from a value less than a predetermined fourth variation amount threshold value to a value more than or equal to a predetermined fifth variation amount threshold value that is more than or equal to the fourth variation amount threshold value.

6. The shift controller (124, 218, 251, 71, 8, 8A) according to any one of claims 1 to 5, wherein the setting/learning means (812, 814, 824) performs at least one of the setting and the learning of the shift operation position under a condition in which a second-order differential value of the input shaft rotational speed of the manual transmission (2) is more than or equal to a predetermined first positive differential threshold value and furthermore a first-order differential value of the input shaft rotational speed of the manual transmission (2) is more than or equal to a predetermined second positive differential threshold value, and after that, the second-order differential value of the input shaft rotational speed of the manual transmission (2) becomes less than or equal to a predetermined third negative differential threshold value.

7. The shift controller (124, 218, 251, 71, 8, 8A) according to any one of claims 1 to 6, further comprising a prohibition means (813, 823) that prohibits the setting/learning means (812, 814, 824) from performing the setting and the learning,
wherein the prohibition means (813, 823) prohibits the setting/learning means (812, 814, 824) from performing the setting and the learning when the manual transmission (2) is in a neutral position.

8. The shift controller (124, 218, 251, 71, 8, 8A) according to any one of claims 1 to 6, further comprising a prohibition means (813, 823) that prohibits the setting/learning means (812, 814, 824) from learning,
wherein the prohibition means (813, 823) prohibits the setting/learning means (812, 814, 824) from performing the setting and the learning when the rotational speed of the internal combustion engine (1) is substantially coincident with the input shaft rotational speed of the manual transmission (2).


**Patentansprüche**

1. Schaltsteuerungseinrichtung (124, 218, 251, 71, 8, 8A) für ein Fahrzeug mit einer Brennkraftmaschine (1), einem Schaltgetriebe (2) und einer Kupplung (3), die zwischen der Brennkraftmaschine (1) und dem Schaltgetriebe (2) angeordnet ist und die imstande ist, zwischen einem eingerückten Zustand und einem ausgerückten Zustand durch ein Ändern eines Kupplungshubs zu schalten, wobei die Schaltsteuerungseinrichtung (124, 218, 251, 71, 8, 8 A) Folgendes aufweist:

ein Erfassungsmittel (811, 821), das den Kupplungshub erfasst;
ein Rotationssynchronisierungsmittel (815, 825), das eine Rotationssynchronisierungssteuerung durchführt, um eine Drehzahl der Brennkraftmaschine (1) mit einer Eingangswellendrehzahl des Schaltgetriebes (2) zu synchronisieren; und
wobei, wenn die Kupplung (3) von dem eingerückten Zustand zu dem ausgerückten Zustand geschaltet wird, das Rotationssynchronisierungsmittel (815, 825) die Rotationssynchronisierungssteuerung unter einer Bedingung beginnt, bei der das Erfassungsmittel (811, 821) erfasst, dass der Kupplungshub eine Position eines ersten Hubs erreicht, der im Voraus an einer Seite festgelegt ist, die weiter eingerückt als die Schaltbetriebsposition ist, an der ein Schaltbetrieb durchgeführt wird, während die Kupplung (3) in dem ausgerückten Zustand ist,
**dadurch gekennzeichnet, dass** die Schaltsteuerungseinrichtung (124, 218, 251, 71, 8, 8A) des Weiteren Folgendes aufweist:

ein Festlegungs-/Lernmittel (812, 814, 824), das mindestens eines von einem Festlegen und einem Lernen einer Schaltbetriebsposition unter einer Bedingung durchführt, bei der ein Änderungsbetrag pro Zeiteinheit des Kupplungshubs geringer als ein oder gleich einem vorbestimmten ersten Änderungsbetragsschwellwert ist,
wobei, als Durchführung des Lernens der Schaltbetriebsposition, das Festlegungs-/Lernmittel (812, 814, 824) den durch das Erfassungsmittel (811, 821) erfassten Kupplungshub unter der Bedingung, bei der der Änderungsbetrag pro Zeiteinheit des Kupplungshubs geringer als der oder gleich dem vorbestimmten ersten Änderungsbetragsschwellwert ist, als die Schaltbetriebsposition lernt.

2. Schaltsteuerungseinrichtung (124, 218, 251, 71, 8, 8A) gemäß Anspruch 1, wobei, wenn die Kupplung (3) von dem ausgerückten Zustand zu dem eingerückten Zustand geschaltet wird, das Rotationssynchronisierungsmittel (815, 825) die Rotationssynchronisierungssteuerung unter einer Bedingung beendet, bei der das Erfassungsmittel (811, 821) erfasst, dass der Kupplungshub eine Position eines zweiten Hubs erreicht, der im Voraus an der Seite festgelegt ist, die weiter eingerückt als die Schaltbetriebsposition ist.

3. Schaltsteuerungseinrichtung (124, 218, 251, 71, 8, 8A) gemäß Anspruch 1, wobei das Festlegungs-/Lernmittel (812, 814, 824) mindestens eines von dem Festlegen und dem Lernen der Schaltbetriebsposition unter einer Bedingung durchführt, bei der ein Änderungsbetrag pro Zeiteinheit eines durch Teilen der Eingangswellendrehzahl des Schaltgetriebes (2) durch eine Fahrzeuggeschwindigkeit erlangten Quotienten mehr als ein oder gleich einem vorbestimmten zweiten Änderungsbetragsschwellwert ist.

4. Schaltsteuerungseinrichtung (124, 218, 251, 71, 8, 8A) gemäß einem der Ansprüche 1 bis 3, wobei das Festlegungs-/Lernmittel (812, 814, 824) mindestens eines von dem Festlegen und dem Lernen der Schaltbetriebsposition unter einer Bedingung durchführt, bei der ein Änderungsbetrag pro Zeiteinheit eines durch Teilen der Drehzahl der Brennkraftmaschine (1) durch eine Fahrzeuggeschwindigkeit erlangten Quotienten mehr als ein oder gleich einem vorbestimmten dritten Änderungsbetragsschwellwert ist.

5. Schaltsteuerungseinrichtung (124, 218, 251, 71, 8, 8A) gemäß einem der Ansprüche 1 bis 4, wobei das Festlegungs-/Lernmittel (812, 814, 824) mindestens eines von dem Festlegen und dem Lernen der Schaltbetriebsposition unter einer Bedingung durchführt, bei der ein Absolutwert eines Änderungsbetrags pro Zeiteinheit der Eingangswellendrehzahl des Schaltgetriebes (2) von einem Wert, der geringer als ein vorbestimmter vierter Änderungsbetragsschwellwert ist, zu einem Wert geändert wird, der mehr als ein oder gleich einem vorbestimmten fünften Änderungsbetragsschwellwert ist, der mehr als der oder gleich dem vierten Änderungsbetragsschwellwert ist.

6. Schaltsteuerungseinheit (124, 218, 251, 71, 8, 8A) gemäß einem der Ansprüche 1 bis 5, wobei das Festlegungs-/Lernmittel (812, 814, 824) mindestens eines von dem Festlegen und dem Lernen der Schaltbetriebsposition unter einer Bedingung durchführt, bei der ein Differenzialwert zweiter Ordnung der Eingangswellendrehzahl des Schaltgetriebes (2) mehr als ein oder gleich einem vorbestimmten ersten positiven Differenzialschwellwert ist, und des Weiteren ein Differenzialwert erster Ordnung der Eingangswellendrehzahl des Schaltgetriebes (2) mehr als ein oder gleich einem vorbestimmten zweiten positiven Differenzialschwellwert ist, und danach der Differenzialwert zweiter Ordnung der Eingangswellendrehzahl des Schaltgetriebes (2) geringer als ein oder gleich einem vorbestimmten dritten negativen Differenzialschwellwert wird.

7. Schaltsteuerungseinrichtung (124, 218, 251, 71, 8, 8A) gemäß einem der Ansprüche 1 bis 6, des Weiteren mit einem Verbotsmittel (813, 823), das dem Festlegungs-/Lernmittel (812, 814, 824) ein Durchführen des Festlegens und des Lernens verbietet,
wobei das Verbotsmittel (813, 823) dem Festlegungs-/Lernmittel (812, 814, 824) ein Durchführen des Festlegens und des Lernens verbietet, wenn das Schaltgetriebe (2) in einer Neutralposition ist.

8. Schaltsteuerungseinrichtung (124, 218, 251, 71, 8, 8A) gemäß einem der Ansprüche 1 bis 6, des Weiteren mit einem Verbotsmittel (813, 823), das dem Festlegungs-/Lernmittel (812, 814, 824) ein Lernen verbietet,
wobei das Verbotsmittel (813, 823) dem Festlegungs-/Lernmittel (812, 814, 824) ein Durchführen des Festlegens und des Lernens verbietet, wenn die Drehzahl der Brennkraftmaschine (1) im Wesentlichen mit der Eingangswellendrehzahl des Schaltgetriebes (2) übereinstimmt.

**Revendications**

1. Dispositif de commande de changement de vitesse (124, 218, 251, 71, 8, 8A) pour un véhicule comprenant un moteur à combustion interne (1), une boîte de vitesses manuelle (2) et un embrayage (3) qui est disposé entre le moteur à combustion interne (1) et la boîte de vitesses manuelle (2) et qui est capable de commuter entre un état enclenché et un état désenclenché en changeant une course d'embrayage, le dispositif de commande de changement de vitesse (124, 218, 251, 71, 8, 8A) comprenant :

un moyen de détection (811, 821) détectant la course d'embrayage ;

un moyen de synchronisation de rotation (815, 825) exécutant une commande de synchronisation de rotation pour synchroniser une vitesse de rotation du moteur à combustion interne (1) avec une vitesse de rotation d'arbre d'entrée de la boîte de vitesses manuelle (2) ; et

dans lequel, lorsque l'embrayage (3) est commuté de l'état engagé à l'état désengagé, le moyen de synchronisation de rotation (815, 825) lance la commande de synchronisation de rotation dans une condition dans laquelle le moyen de détection (811, 821) détecte que la course d'embrayage atteint une position d'une première course qui est réglée à l'avance sur un côté plus engagé que la position d'opération de changement de vitesse où une opération de changement de vitesse est exécutée alors que l'embrayage (3) est dans l'état désengagé, **caractérisé en ce que** le dispositif de commande de changement de vitesse (124, 218, 251, 71, 8, 8A) comprend en outre

un moyen de réglage/apprentissage (812, 814, 824) exécutant au moins un d'un réglage et d'un apprentissage d'une position d'opération de changement de vitesse dans une condition dans laquelle une quantité variable par unité de temps de la course d'embrayage est inférieure ou égale à une première valeur seuil de quantité de variation prédéterminée,

dans lequel, en tant qu'exécution de l'apprentissage de la première opération de changement de vitesse, le moyen de réglage/apprentissage (812, 814, 824) apprend, en tant que position d'opération de changement de vitesse, la course d'embrayage détectée par le moyen de détection (811, 821) dans la condition dans laquelle la quantité de variation par unité de temps de la course d'embrayage est inférieure ou égale à la première valeur seuil de quantité de variation prédéterminée.

2. Dispositif de commande de changement de vitesse (124, 218, 251, 71, 8, 8A) selon la revendication 1, dans lequel, lorsque l'embrayage (3) est commuté de l'état désengagé à l'état engagé, le moyen de synchronisation de rotation (815, 825) met fin à la commande de synchronisation de rotation dans une condition dans laquelle le moyen de détection (811, 821) détecte que la course d'embrayage atteint une position d'une seconde course qui est réglée à l'avance sur le côté plus engagé que la position d'opération de changement de vitesse.

3. Dispositif de commande de changement de vitesse (124, 218, 251, 71, 8, 8A) selon la revendication 1, dans lequel le moyen de réglage/apprentissage (812, 814, 824) exécute au moins un du réglage et de l'apprentissage de la position d'opération de changement de vitesse dans une condition dans laquelle une quantité de variation par unité de temps d'un quotient obtenu en divisant la vitesse de rotation d'arbre d'entrée de la boîte de vitesses manuelle (2) par une vitesse de véhicule est supérieure ou égale à une seconde valeur seuil de quantité de variation prédéterminée.

4. Dispositif de commande de changement de vitesse (124, 218, 251, 71, 8, 8A) selon l'une quelconque des revendications 1 à 3, dans lequel le moyen de réglage/apprentissage (812, 814, 824) exécute au moins un du réglage et de l'apprentissage de la position d'opération de changement de vitesse dans une condition dans laquelle une quantité de variation par unité de temps d'un quotient obtenu en divisant la vitesse de rotation du moteur à combustion interne (1) par une vitesse de véhicule est supérieure ou égale à une troisième valeur seuil de quantité de variation prédéterminée.

5. Dispositif de commande de changement de vitesse (124, 218, 251, 71, 8, 8A) selon l'une quelconque des revendications 1 à 4, dans lequel le moyen de réglage/apprentissage (812, 814, 824) exécute au moins un du réglage et de l'apprentissage de la position d'opération de changement de vitesse dans une condition dans laquelle une valeur absolue d'une quantité de variation par unité de temps de la vitesse de rotation d'arbre d'entrée de la boîte de vitesses manuelle (2) est modifiée d'une valeur inférieure à une quatrième valeur seuil de quantité de variation prédéterminée à une valeur supérieure ou égale à une cinquième valeur seuil de quantité de variation prédéterminée qui est supérieure ou égale à la quatrième valeur seuil de quantité de variation.

6. Dispositif de commande de changement de vitesse (124, 218, 251, 71, 8, 8A) selon l'une quelconque des revendications 1 à 5, dans lequel le moyen de réglage/apprentissage (812, 814, 824) exécute au moins un du réglage et de l'apprentissage de la position d'opération de changement de vitesse dans une condition dans laquelle une valeur différentielle de second ordre de la vitesse de rotation d'arbre d'entrée de la boîte de vitesses manuelle (2) est supérieure ou égale à une première valeur seuil différentielle positive prédéterminée et en outre une valeur différentielle de premier ordre de la vitesse de rotation d'arbre d'entrée de la boîte de vitesses manuelle (2) est supérieure ou égale à une seconde valeur seuil différentielle positive prédéterminée, et après quoi, la valeur différentielle de second ordre de la vitesse de rotation d'arbre d'entrée de la boîte de vitesses manuelle (2) devient inférieure ou égale à une troisième valeur seuil différentielle négative prédéterminée.

**7.** Dispositif de commande de changement de vitesse (124, 218, 251, 71, 8, 8A) selon l'une quelconque des revendications 1 à 6, comprenant en outre un moyen d'interdiction (813, 823) qui interdit au moyen de réglage/apprentissage (812, 814, 824) d'exécuter le réglage et l'apprentissage,

dans lequel le moyen d'interdiction (813, 823) interdit au moyen de réglage/apprentissage (812, 814, 824) d'exécuter le réglage et l'apprentissage lorsque la boîte de vitesses manuelle (2) est dans une position neutre.

**8.** Dispositif de commande de changement de vitesse (124, 218, 251, 71, 8, 8A) selon l'une quelconque des revendications 1 à 6, comprenant en outre un moyen d'interdiction (813, 823) qui interdit au moyen de réglage/apprentissage (812, 814, 824) d'exécuter l'apprentissage,

dans lequel le moyen d'interdiction (813, 823) interdit au moyen de réglage/apprentissage (812, 814, 824) d'exécuter le réglage et l'apprentissage lorsque la vitesse de rotation du moteur à combustion interne (1) coïncide sensiblement avec la vitesse de rotation d'arbre d'entrée de la boîte de vitesses manuelle (2).

FIG.1

# FIG.2

FIG.3

FIG.4

FIG.5

## FIG.6

8

ECU

71 — Clutch stroke sensor

411 — Output shaft rotational speed sensor

218 — Input shaft rotational speed sensor

124 — Engine rotational speed sensor

502 — Shift position sensor

251 — Neutral sensor

252 — Shift stroke sensor

253 — Select stroke sensor

431 — Axle rotational speed sensor

61 — Accelerator opening degree sensor

101 — Injector

104 — Igniter

106 — Throttle motor

811 Detection part

814 Learning part

813 Prohibition part

812 Position storage part

815 Rotation synchronization part

FIG.7

(a)

Clutch stroke St

Disengagement

St0

△St1

△St2

G11

St1

St2

Engagement

Time T

(b)

Input shaft
rotational speed Ni

0

G12

Time T

(c)

Engine rotational
speed Ne

G13

Time T

T14  T15

Learning

Engagement  T11  T13        T16  T18  Engagement

T12                T17

Synchronization
control

# FIG.8

```
                    ┌──────────────┐
                    │    Start     │
                    └──────┬───────┘
                           │
          ┌──────────────▼────────── S101
          │        ╱                ╲
    Y     │      ╱   |Ne−Ni|≦△N0?    ╲
    ◄─────┤      ╲                   ╱
                   ╲                ╱
                     ▼ N
                           ── S103
                 ╱                ╲
               ╱  Shift position = "N"  ╲  Y
               ╲                  ╱ ─────►
                 ╲              ╱
                    ▼ N
                          ── S105
                ╱              ╲
              ╱   △St≦△S0?       ╲  N
              ╲                 ╱ ─────►
                ╲             ╱
                   ▼ Y
                         ── S107
              ╱   △Ni   △Ni0  ╲
            ╱     ── ≧ ──      ╲  N
            ╲     △V    △V0    ╱ ─────►
              ╲             ╱
                 ▼ Y
                        ── S109
         ┌────────────────────────┐
         │  Learn stroke St as shift│
         │  operation position St0  │
         └────────────┬────────────┘
                      │
                      ▼◄──────────────
              ┌──────────────┐
              │    Return    │
              └──────────────┘
```

# FIG.9

```
                    ┌─────────────┐
                    │    Start    │
                    └──────┬──────┘
                           │
      ┌────────────────────┤      ⌐S201
      │                    ▼
   N  │    ╱─────────────────────╲
  ┌───┤   ⟨   |Ne−Ni| ≧ △N1?      ⟩
  │   └─   ╲─────────────────────╱
  │              │ Y
  │              │              ⌐S203
  │   N          ▼
  │  ┌───╱──────────────────────────────────╲
  │  │  ⟨ Does clutch stroke St reach position of ⟩
  │  └──⟨ first stroke △St1 more engaged than     ⟩
  │     ╲ shift operation position St0?           ╱
  │              │ Y
  │              │           ⌐S205
  │              ▼
  │     ┌──────────────────────┐
  │     │  Synchronize Ne with Ni │
  │     └──────────────────────┘
  │              │            ⌐S207
  │   N          ▼
  │  ┌───╱──────────────────────────────────╲
  │  │  ⟨ Does clutch stroke St reach position of ⟩
  │  └──⟨ second stroke △St2 more engaged than    ⟩
  │     ╲ shift operation position St0?           ╱
  │              │ Y
  │              │         ⌐S209
  │              ▼
  │     ┌──────────────────────┐
  │     │      Terminate        │
  │     │ synchronization control │
  │     └──────────────────────┘
  │              │
  │              ▼
  │       ┌─────────────┐
  │       │     End     │
  │       └─────────────┘
```

# FIG.10

(a)

Disengagement

St0

Clutch stroke St    St1

St2

Engagement

G21

Time T

(b)

Input shaft
rotational speed Ni

0

G22

Time T

(c)

First-order
differential value
ND1

DF2

0

G23

Time T

(d)

Second-order
differential value
ND2

DF1

0

DF3

G24

T21  T23   T24
T22

Time T

## FIG.11

ECU — 8A

71 — Clutch stroke sensor

411 — Output shaft rotational speed sensor

218 — Input shaft rotational speed sensor

124 — Engine rotational speed sensor

502 — Shift position sensor

251 — Neutral sensor

252 — Shift stroke sensor

253 — Select stroke sensor

431 — Axle rotational speed sensor

61 — Accelerator opening degree sensor

101 — Injector

104 — Igniter

106 — Throttle motor

821 — Detection part

824 — Setting part

823 — Prohibition part

825 — Rotation synchronization part

# FIG.12

```
            ┌──────────────┐
            │    Start     │
            └──────┬───────┘
                   │
                   ▼               ⌐S301
         N   ┌─────────────┐
       ┌─────┤ |Ne−Ni|≧ △N? │
       │     └──────┬──────┘
       │            │ Y          ⌐S303
       │            ▼
       │     ┌──────────────────┐  Y
       │     │ Shift position = "N" ├──────┐
       │     └──────┬───────────┘          │
       │            │ N         ⌐S305       │
       │            ▼                       │
       │     ┌──────────────┐  N            │
       │     │  △St≦△S0?    ├────────┐      │
       │     └──────┬───────┘        │      │
       │            │ Y        ⌐S307  │      │
       │            ▼                 │      │
       │     ┌──────────────┐  N      │      │
       │     │ △Ni ≧ △Ni0   ├────┐    │      │
       │     │ ──    ────   │    │    │      │
       │     │ △V    △V0    │    │    │      │
       │     └──────┬───────┘    │    │      │
       │            │ Y          │    │      │
       │            ▼        ⌐S309│    │      │
       │     ┌──────────────┐    │    │      │
       │     │ Set stroke St as shift       │
       │     │ operation position St0 │     │
       │     └──────┬───────┘         │      │
       │            │                 │      │
       │            ▼        ⌐S311     │      │
       │     ┌──────────────┐         │      │
       └────►│ Syncronize Ne with Ni │       │
             └──────┬───────┘         │      │
                    │         ⌐S313   │      │
                    ▼                 │      │
         N  ┌────────────────────────┐       │
       ┌────┤ Does clutch stroke St reach position of │
       │    │ second stroke △St2 more engaged than │
       │    │ shift operation position St0? │        │
       │    └──────┬─────────────┘          │        │
       │           │ Y         ⌐S315        │        │
       │           ▼                        │        │
       │    ┌──────────────┐                │        │
       │    │  Terminate   │                │        │
       │    │ synchronization control │     │        │
       │    └──────┬───────┘                │        │
       │           │◄───────────────────────┴────────┘
       │           ▼
       │    ┌──────────────┐
       │    │   Return     │
       │    └──────────────┘
```

**REFERENCES CITED IN THE DESCRIPTION**

**Patent documents cited in the description**

- JP 2006233851 A
- EP 1990562 A2